# EUROPEAN PATENT APPLICATION

(11) **EP 4 635 898 A1**
(43) Date of publication of application: **22.10.2025**
(21) Application number: 23903438.2
(22) Date of filing: 08.12.2023
(51) Int. Cl.: B66F 9/075, B60H 1/32, E02F 9/16, F16M 11/04, F16M 13/02, F24F 1/0007, F24F 5/00

(54) **STAND**

(30) Priority: 13.12.2022 JP 2022198869; 13.12.2022 JP 2022198870; 13.12.2022 JP 2022198871
(71) Applicant: BROTHER KOGYO KABUSHIKI KAISHA, Nagoya-shi, Aichi 467-8561 (JP)
(72) Inventor: OCHIAI, Yusuke, Nagoya-shi, Aichi 467-8562 (JP); SAKANO, Yuji, Nagoya-shi, Aichi 467-8562 (JP); YOSHIDA, Shigeki, Nagoya-shi, Aichi 467-8562 (JP); MATSUMOTO, Daiki, Nagoya-shi, Aichi 467-8562 (JP); SATO, Ryosuke, Nagoya-shi, Aichi 467-8562 (JP); ICHIHASHI, Masashi, Nagoya-shi, Aichi 467-8562 (JP); SHIRAI, Manabu, Nagoya-shi, Aichi 467-8562 (JP)
(74) Representative: J A Kemp LLP
(86) International application number: PCT/JP2023/043989
(87) International publication number: WO 2024/128151

(57) **Abstract**

A mounting frame is fixed to an open-cabin type vehicle having a first pillar and a second pillar. The mounting frame includes a base including a holding section configured to hold a subject, and a length adjustment mechanism connected to the holding section, the base having a length in a first longitudinal direction adjustable by the length adjustment mechanism, a first pillar fixing section that fixes a first end portion of the base, in a first direction along the first longitudinal direction, to the first pillar of the vehicle, and a second pillar fixing section that fixes a second end portion of the base, in a second direction opposite to the first direction, to the second pillar of the vehicle.

## Description

### TECHNICAL FIELD

The present invention relates to a mounting frame capable of attaching an object to an open-cabin type vehicle.

### BACKGROUND

Conventionally, a work machine with a roof supported by multiple pillars and covering a upper portion of a driver's seat is equipped with a mist device that sprays mist to the rear of the driver's seat (for example, see Patent Document 1). The mist device includes multiple nozzles, a water supply device, and a circuit device, and is detachably mounted between a left pillar and a right pillar of the work machine using four band members. The multiple nozzles are arranged to surround a driver seated in the driver's seat, with spray outlets directed toward the driver, and emit cooling mist. The water supply device supplies water to the multiple nozzles. The circuit device individually controls opening degree of multiple flow controls mechanisms configured to control flow amounts sprayed from the multiple nozzles.

### PRIOR ART DOCUMENT

### PATENT DOCUMENT

Patent Document 1: Japanese Unexamined Patent Application Publication No. 2022-40493

### SUMMARY OF THE INVENTION

### PROBLEMS TO BE SOLVED BY THE INVENTION

Conventionally, various types of work machines exist, each having a different distance between multiple pillars. When fixing a mist device to a work machine, it is necessary to select a mist device suitable for each type of work machine, making the installation process complicated.

The objective of the present invention is to provide a mounting frame that is fixed to an open-cabin type vehicle having a first pillar and a second pillar, wherein the mounting frame is capable of being fixed to any of multiple vehicles having different distances between the first pillar and the second pillar.

### MEANS FOR SOLVING THE PROBLEM

A mounting frame according to one aspect of the present invention is a mounting frame to be fixed to an open-cabin type vehicle having a first pillar and a second pillar, including a base including a holding section configured to hold a subject, and a length adjustment mechanism connected to the holding section, the base having a length in a first longitudinal direction adjustable by the length adjustment mechanism, a first pillar fixing section that fixes a first end portion of the base, in a first direction along the first longitudinal direction, to the first pillar of the vehicle, and a second pillar fixing section that fixes a second end portion of the base, in a second direction opposite to the first direction, to the second pillar of the vehicle. The length adjustment mechanism of this mounting frame allows for the modification of the length of the base in the longitudinal direction K, thereby facilitating the fixation of the mounting frame to any of multiple vehicles with different distances between the first pillar and the second pillar.

### BRIEF DESCRIPTION OF THE DRAWINGS

[FIG. 1] FIG. 1 is a perspective view of a vehicle.
[FIG. 2] FIG. 2 is a perspective view of an air conditioning system, including an air conditioning device and a mounting frame, along with a partial view of a vehicle equipped with the air conditioning system.
[FIG. 3] FIG. 3 is a rear view of the air conditioning system and a partial view of a vehicle equipped with the air conditioning system.
[FIG. 4] FIG. 4 is a right side view of the air conditioning system and a partial view of a vehicle equipped with the air conditioning system.
[FIG. 5] FIG. 5 is a perspective view of the air conditioning device in different states.
[FIG. 6] FIG. 6 is an exploded perspective view of a first fixing section and a first support member of the mounting frame.
[FIG. 7] FIG. 7 is a front view of the mounting frame and a partial view of a vehicle equipped with the mounting frame.
[FIG. 8] FIG. 8 is a perspective view of the mounting frame.
[FIG. 9] FIG. 9 is a bottom view of the mounting frame.
[FIG. 10] FIG. 10 is a rear view of the mounting frame.
[FIG. 11] FIG. 11 is a plan view of the mounting frame.
[FIG. 12] FIG. 12 is a front view of the mounting frame.
[FIG. 13] FIG. 13 is a right side view of the mounting frame.
[FIG. 14] FIG. 14 is a left side view of the mounting frame.
[FIG. 15] FIG. 15 is a perspective view of the mounting frame, showing changes in the front-rear position of a base relative to the first and second fixing sections in different states.
[FIG. 16] FIG. 16 is a plan view of the mounting frame, showing changes in the left-right length of the base relative to the first and second fixing sections in different states.
[FIG. 17] FIG. 17 is an exploded perspective view of the second fixing section and a first lock mechanism of the mounting frame.
[FIG. 18] FIG. 18 is a perspective view showing a first lock member in a first lock position in one state and in a first release position in another state.
[FIG. 19] FIG. 19 is a perspective view of the mounting frame, showing changes in the opening angle of the base relative to the first and second fixing sections in different states.
[FIG. 20] FIG. 20 is a plan view of the mounting frame, showing changes in the opening angle of the base relative to the first and second fixing sections in different states.
[FIG. 21] FIG. 21 is a plan view of a modified example of the mounting frame.
[FIG. 22] FIG. 22 is an exploded perspective view of a first fixing section in a modified example of the mounting frame.
[FIG. 23] FIG. 23 is a perspective view of a second fixing section, a shaft, and a first lock mechanism.
[FIG. 24] FIG. 24 is a cross-sectional view along a section line in FIG. 23, showing a first lock member in a first lock position in one state and in a first release position in another state.
[FIG. 25] FIG. 25 is a schematic plan view of another modified example of the mounting frame.

### EMBODIMENTS FOR CARRYING OUT THE INVENTION

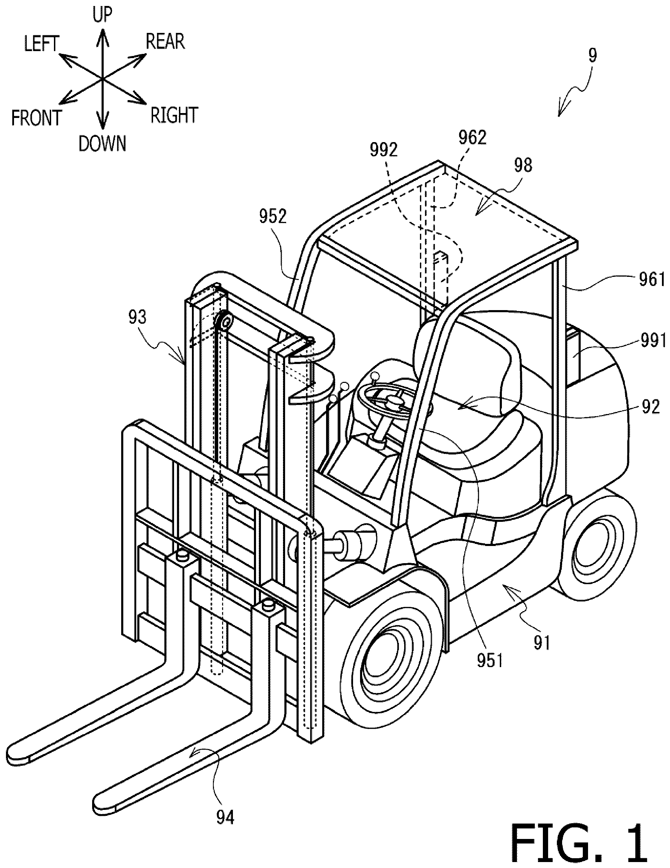

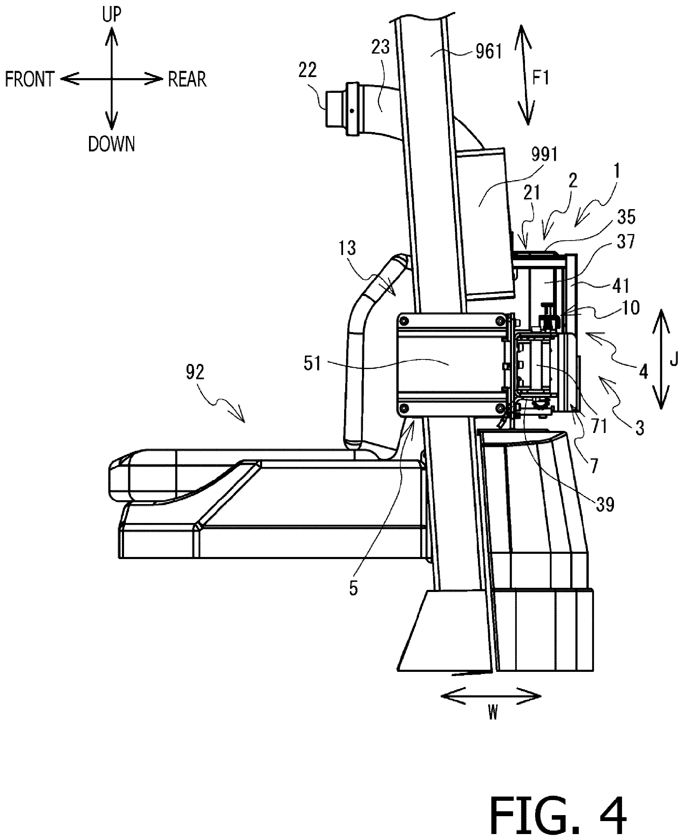

The following describes an embodiment that concretely implements the present invention, with reference to the drawings, in a step-by-step manner. In the following description, directions indicated by arrows in the drawings, namely left and right, front and rear, and up and down, are used. With reference to FIGS. 1 to 4, a vehicle to which an air conditioning system is installed in this embodiment is described. In this embodiment, the vehicle is an open-cabin type forklift.

A vehicle 9 includes a vehicle body 91, a driver's seat 92, a mast 93, a fork 94, pillars 951 and 952, a first pillar 961, a second pillar 962, a head guard 98, and lamps 991 and 992. The vehicle body 91 houses an internal structure capable of generating power, including an engine and a power battery, and supports tires at its four corners. The driver's seat 92 is provided on the upper part of the vehicle body 91. The mast 93 is installed at the front end of the vehicle body 91 and extends in the vertical direction. The fork 94 is capable of moving vertically along the mast 93.

The pillar 951 extends diagonally upward toward the rear from a front-right portion relative to the driver's seat 92 in the vehicle body 91 and then bends rearward to extend horizontally. The pillar 952 extends diagonally upward toward the rear from a front-left portion relative to the driver's seat 92 of the vehicle body 91 and then bends rearward to extend horizontally. The first pillar 961 extends upward from a rear-right portion relative to the driver's seat 92 of the vehicle body 91. The upper end of the first pillar 961 is connected to a rear end portion of the lower surface of the pillar 951. The second pillar 962 extends upward from a rear-left portion relative to the driver's seat 92 of the vehicle body 91. The upper end of the second pillar 962 is connected to a rear end portion of the lower surface of the pillar 952. The driver's seat 92 is positioned between the first pillar 961 and the second pillar 962 in the left-right direction. The front, rear, left, and right directions of the driver's seat 92 are open. That is, the vehicle 9 is an open-cabin type forklift, in which the front, rear, left, and right sides of the driver's seat 92 are open. The term "open-cabin type vehicle" is not limited to a vehicle where all four directions of the driver's space are open but also includes a vehicle where at least a portion of the space for the driver and passengers is open and communicates with the exterior. The lamp 991 is a vertically elongated rectangular parallelepiped and is provided on a rear surface of the first pillar 961. The lamp 992 is also a vertically elongated rectangular parallelepiped and is provided on a rear surface of the second pillar 962. The upper end position of the driver's seat 92 is within the vertical extension range of the lamps 991 and 992. A longitudinal direction F1 of the first pillar 961 and a longitudinal direction F2 of the second pillar 962 are each slightly inclined toward the driver's seat 92 with respect to the vertical direction.

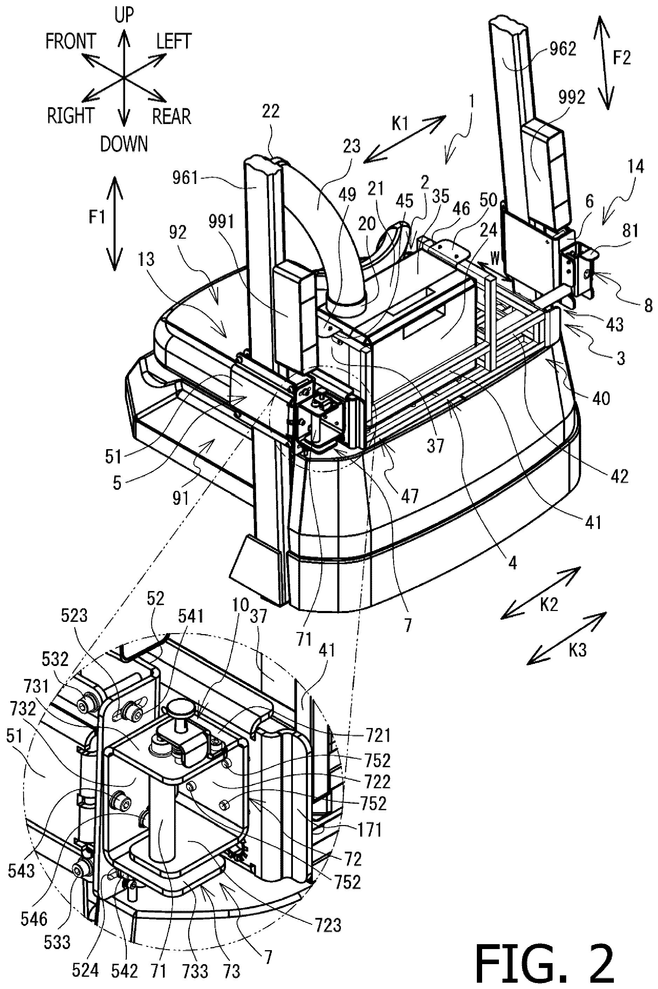

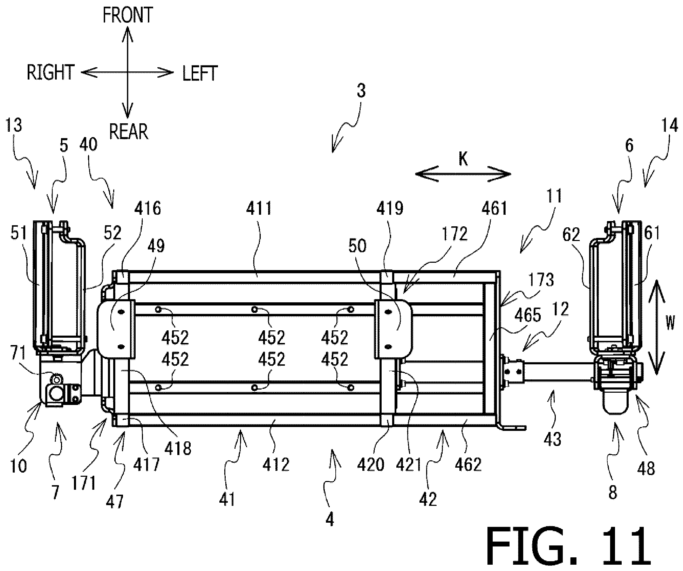

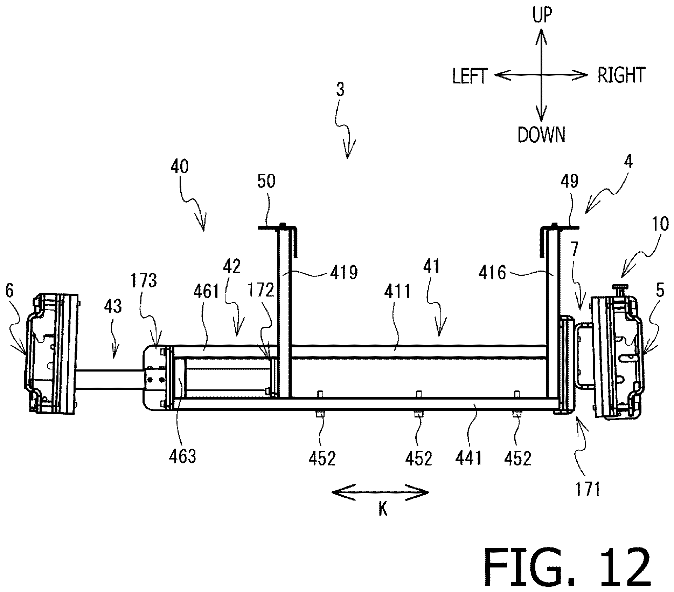

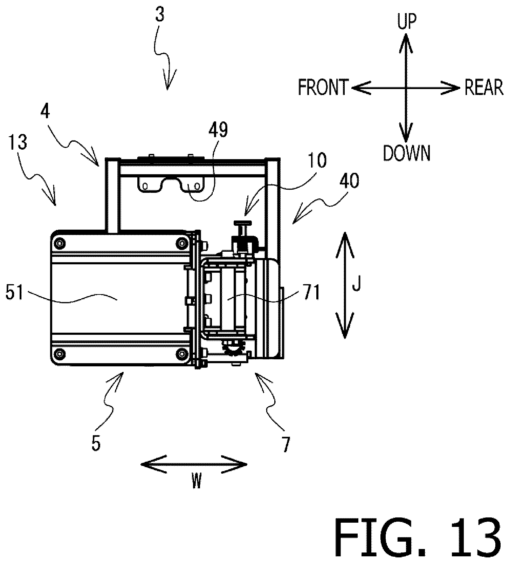

With reference to FIGS. 2 to 20, an air conditioning system 1 installed on the vehicle 9 will be described. As shown in FIGS. 2 to 4, the air conditioning system 1 includes an air conditioning device 2 and a mounting frame 3, wherein the air conditioning device 2 is mounted rearward of the driver's seat 92 and above the rear portion of the vehicle body 91 via the mounting frame 3. The description of the air conditioning system 1 will be provided based on a reference position, in which a longitudinal direction K1 of the air conditioning device 2 is aligned with a longitudinal direction K2 of the mounting frame 3, and the air outlet 20 of the air conditioning device 2 is positioned on the side where a first pillar fixing section 13 of the mounting frame 3 is provided. The longitudinal direction K1 of the air conditioning device 2, the longitudinal direction K2 of the mounting frame 3, and a longitudinal direction K3 of the base 4 are collectively referred to as a longitudinal direction K. When the air conditioning system 1 is in the reference position, the longitudinal direction K corresponds to the left-right direction. Among the two directions parallel to the longitudinal direction K, the rightward direction is referred to as the first direction, and the leftward direction is referred to as the second direction. A fixing member used in this embodiment is, for example, a bolt, which is secured by threading into a threaded hole formed in a hole through which the tip of the bolt is inserted.

In this embodiment, the air conditioning device 2 is, for example, an evaporative cooling-type spot cooler. The air conditioning device 2 includes a housing 21, an air outlet 20, a duct 23, and a water supply port 19. The housing 21 has a rectangular parallelepiped shape that is elongated in the left-right direction. The air outlet 20 is provided on the upper surface of the right end portion, which is one end of the housing 21 in the longitudinal direction K1. The duct 23 is connected to the air outlet 20, extends upward from the air outlet 20, and then bends forward. The front end 22 of the duct 23 is directed toward the driver's seat 92 of the vehicle 9 and is positioned forward of the front end of the first pillar 961.

As shown in FIGS. 2 to 5, the air conditioning device 2 further includes a power section 39, a tank 24, a cooling section 36, a fan 38, and fixed portions 26, 27, and 17. The power section 39 is one of a power harness extending from one end of the housing 21 in the longitudinal direction K1 and a power battery. If the power section 39 is a power harness, the power harness is connected, for example, to the power source of the vehicle 9 on which the mounting frame 3 is installed. If the power section 39 is a power battery, the power battery may be provided inside or outside the housing 21 or may be integrated with the housing 21. In this embodiment, the power section 39 includes a power harness extending from a side surface 37 positioned on one side of the housing 21 in the longitudinal direction K1. The air outlet 20 is provided at one end of the housing 21 in the longitudinal direction K1. The air conditioning device 2 is held by a holding section 41 of the mounting frame 3 in an orientation where the air outlet 20 is positioned at the right end portion of an upper surface 35 of the housing 21.

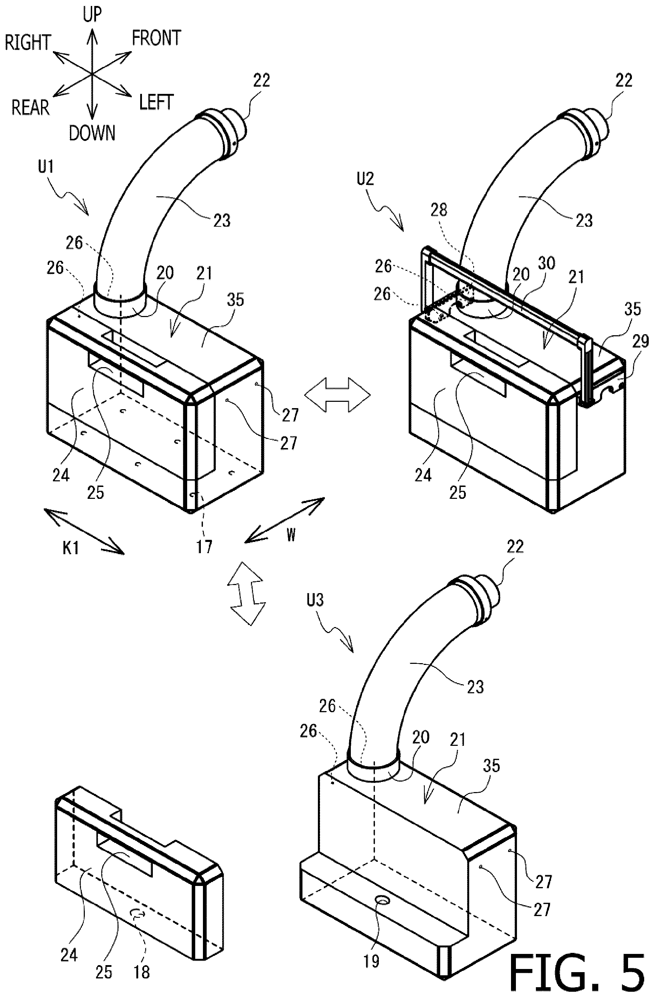

The tank 24 is a rectangular solid-shape container having a water supply section 18 at a bottom and is configured to store a liquid, such as water, to be supplied to the cooling section 36. The water supply section 18 engages with a water supply port 19 provided on the housing 21. At least a portion of the tank 24 is positioned facing one side in a width direction W, which intersects both the longitudinal direction F1 of the first pillar 961 and the longitudinal direction K of the base 4. In this embodiment, the width direction W corresponds to the front-rear direction, and one side of the width direction W refers to the rearward direction. The rear surface of the tank 24 is the largest surface of the tank 24 and forms the rear surface on one side in the width direction W of the housing 21. In the front-rear direction, the tank 24 is positioned rearward of the air outlet 20. A gripping section 25, which is recessed to toward the front, is formed at the upper portion of the rear surface of the tank 24. As shown in FIG. 5, in state U3, the tank 24 is detachably attached to the housing 21. When removing the tank 24 from the housing 21, the user of the air conditioning system 1 can hook a finger or another operating object on the gripping section 25.

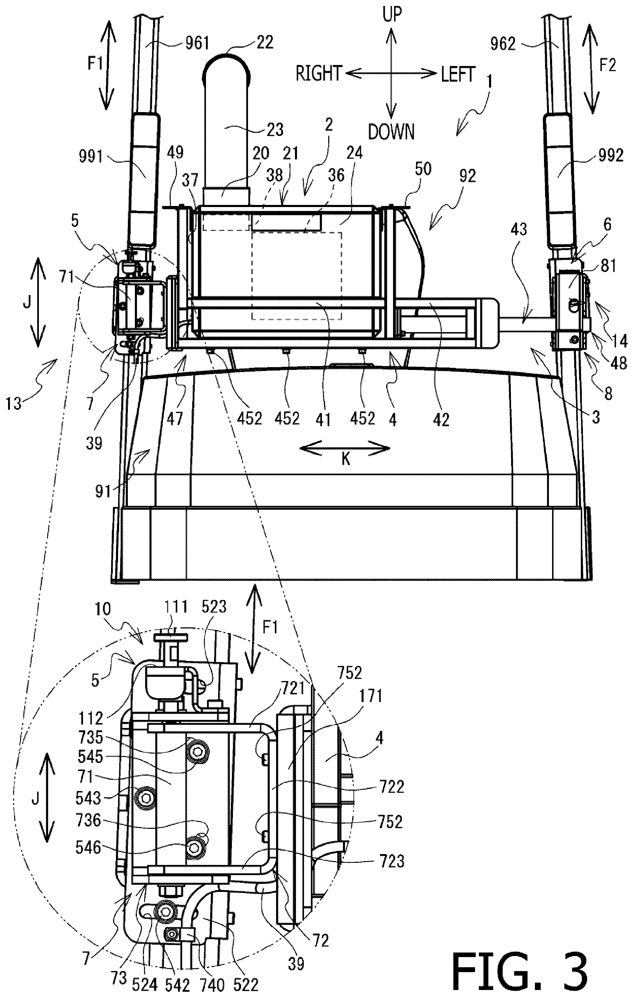

As shown in FIG. 3, the cooling section 36 and the fan 38 are provided inside the housing 21. The cooling section 36 is configured to cool air and includes at least one of a sensible heat exchanger and an evaporation element. The sensible heat exchanger is a component that exchanges sensible heat between two airflows. The evaporation element is, for example, a filter to which water is supplied, and is configured to cool air by utilizing evaporative heat when the supplied water evaporates from the filter. In this embodiment, the cooling section 36 includes an evaporation filter, which absorbs liquid supplied from the tank 24. The cooling section 36 is configured to cool the surrounding air by utilizing the evaporative heat of the liquid absorbed by the evaporation filter. The fan 38 is driven by electric power supplied from the power section 39 and blows cooled air to the exterior of the housing 21 through the air outlet 20. The fan 38 may be any type of fan, including a centrifugal fan, such as a sirocco fan, or a propeller fan.

As shown in FIG. 5, in state U1, the fixed portion 26 is a pair of front and rear threaded holes formed on the upper portion of the right side surface of the housing 21. The fixed portion 27 is a pair of front and rear threaded holes formed on the upper portion of the left side surface of the housing 21. The fixed portion 17 has six threaded holes, arranged in three positions in the left-right direction and two rows in the front-rear direction, provided on the bottom surface of the housing 21. As shown in FIGS. 2 and 3, the air conditioning system 1 includes fixtures 49 and 50, which detachably attached to the fixed portions 26 and 27 of the housing 21 to the fixing sections 45 and 46 of the mounting frame 3, which will be described later. The fixed portions 26 and 27 of the housing 21 are fixed to the fixing sections 45 and 46 of the mounting frame 3 via the fixtures 49 and 50. The fixtures 49 and 50 each have an L-shaped profile in a rear view, including a wall portion extending in the vertical direction and a wall portion extending in the left-right direction. The fixture 49 is screwed into the fixed portion 26 of the housing 21 and is also screwed into the fixing section 45 of the mounting frame 3. Similarly, the fixture 50 is screwed into the fixed portion 27 of the housing 21 and is also screwed into the fixing section 46 of the mounting frame 3. The fixed portion 17 of the housing 21 is fixed to the bottom portion of the holding section 41 of the mounting frame 3 using a fixing member 452.

As shown in state U2 of FIG. 5, the air conditioning device 2 includes a handle 30, which is detachably secured to the fixed portions 26 and 27 when the fixed portions 26 and 27 of the air conditioning device 2 are not fixed to the fixing sections 45 and 46 of the mounting frame 3. The handle 30 has an elongated shape in the longitudinal direction K1 of the air conditioning device 2. The handle 30 is supported by the housing 21 via fixtures 28 and 29 and is rotatable about its lower right end and lower left end. The fixtures 28 and 29 have an inverted U-shape in the front-rear direction when viewed from the right side. The fixture 28 is screwed into the fixed portion 26 of the housing 21, and the lower right end of the handle 30 is rotatably supported by the fixture 28. Similarly, the fixture 29 is screwed into the fixed portion 27 of the housing 21, and the lower left end of the handle 30 is rotatably supported by the fixture 29.

The mounting frame 3 is attached to an open-cabin type vehicle 9 having the first pillar 961 and the second pillar 962, as shown in FIG. 1. As shown in FIGS. 2 to 4, the mounting frame 3 is used to mount the air conditioning device 2 at a position below the head guard 98 of the vehicle 9. The mounting frame 3 includes a first pillar fixing section 13, a base 4, and a second pillar fixing section 14. Considering that the mounting frame 3 is installed on the vehicle 9 for outdoor use and is exposed to a high-vibration environment, each component of the mounting frame 3 is formed from a rigid material, such as metal. The base 4 is positioned between the first pillar fixing section 13 and the second pillar fixing section 14 in the longitudinal direction K of the base 4.

The first pillar fixing section 13 attaches a first end portion 47 of the base 4 in the first direction along the longitudinal direction K to the first pillar 961 of the vehicle 9. In this embodiment, the first end portion 47 corresponds to the right end portion of the base 4. The first pillar fixing section 13 is attached to a position below the lamp 991 on the first pillar 961. The first pillar fixing section 13 includes a first fixing section 5 and a first support member 7. The first fixing section 5 is connected to the first support member 7 and is attached to the first pillar 961 of the vehicle 9. The first fixing section 5 is a clamp that fixes the first pillar 961 by clamping it in a first clamping direction C1, which intersects the longitudinal direction F1 of the first pillar 961. The first fixing section 5 includes a pair of first clamping members 51 and 52. In this embodiment, the first clamping direction C1 corresponds to the left-right direction. The first clamping member 51 is positioned on the right side of the first pillar 961, while the first clamping member 52 is positioned on the left side of the first pillar 961.

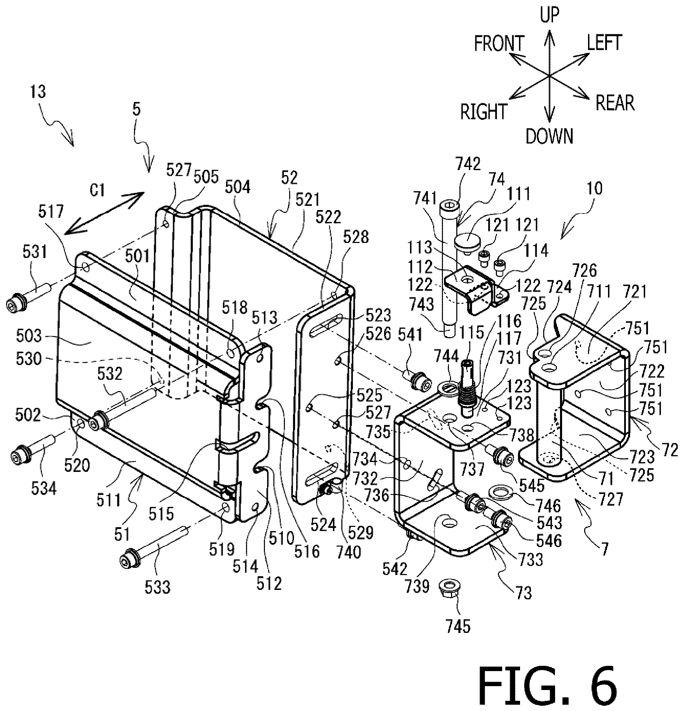

As shown in FIG. 6, the first clamping member 51 is a bent plate-shaped component that includes a wall section 511 and a wall section 512. The wall section 511 has a rectangular shape in a right-side view. The upper end portion 501 and the lower end portion 502 of the wall section 511 are each positioned at a left side of a central portion 503 of the wall section 511, the central portion 503 being a central portion in the vertical direction. In the left-right direction, the positions of the upper end portion 501 and the lower end portion 502 are substantially the same. The upper end portion 501 has holes 517 and 518 formed therein, while the lower end portion 502 has holes 519 and 520 formed therein. The holes 517 to 520 are through holes penetrating in the left-right direction and having circular shapes when viewed from the right side. The holes 517 to 520 are formed near the four corners of the wall section 511 when viewed from the right side. The wall section 512 extends leftward from the rear end of the wall section 511. A first shaft hole 513 is formed at the upper end portion of the wall section 512, and a first shaft hole 514 is formed at the lower end portion of the wall section 512. The first shaft holes 513 and 514 are through holes penetrating in the front-rear direction and a circular shapes when viewed from a rear side. The wall section 512 has an upper and lower pair of notches 516 and 510, which are cut out from the right end of the wall section 512 toward the left. In the vertical direction, the pair of notches 516 and 510 are formed between the first shaft holes 513 and 514. At the junction between the wall section 511 and the wall section 512, a long hole 515 extending in the left-right direction and penetrating in the front-rear direction is formed. In the vertical direction, the hole 515 is formed between the pair of notches 516 and 510.

The first clamping member 52 is a bent plate-shaped component that includes a wall section 521 and a wall section 522. The wall section 521 has a rectangular shape in a right-side view. The front end portion 505 of the wall section 521 is positioned to the right of the central portion 504 in the front-rear direction. The front end portion 505 has holes 527 and 530 formed therein, while the rear end portion of the central portion 504 has holes 528 and 529 formed therein. The holes 527 to 530 are circular holes, which are formed near the four corners of the wall section 521, and penetrate in the left-right direction, as seen in a right-side view. The wall section 522 extends rightward from the rear end of the wall section 521. The length in the left-right direction of the wall section 522 is greater than that of the wall section 512. The wall section 522 is positioned behind the wall section 512. The upper end portion of the wall section 522 has a first elongated hole 523, and the lower end portion of the wall section 522 has a first elongated hole 524. The first elongated holes 523 and 524 are elongated in the first clamping direction C1, which is the left-right direction, and penetrate in the front-rear direction. Furthermore, the wall section 522 has circular holes 525 to 527, which penetrate in the front-rear direction, as seen in a rear view. The hole 525 is formed to the right of the center of the wall section 522 in the left-right direction, whereas the holes 526 and 527 are formed to the left of the center in the left-right direction. In the vertical direction, the hole 525 is positioned between the holes 526 and 527. Below the first elongated hole 524, the wall section 522 is provided with a holder 740. The holder 740 is configured to hold and guide the harness of the power section 39 of the air conditioning device 2.

When attaching the first fixing section 5 to the first pillar 961, the user positions the first clamping member 51 on the right side of the first pillar 961 and positions the first clamping member 52 on the left side of the first pillar 961. The user places the wall section 512 in front of the wall section 522. The user inserts a first fixing member 541 from the rear through both the first elongated hole 523 of the wall section 522 of the first clamping member 52 and the first shaft hole 513 of the wall section 512 of the first clamping member 51. Similarly, the user inserts a first fixing member 542 from the rear through both the first elongated hole 524 and the first shaft hole 514. The first elongated holes 523 and 524 allow positional adjustment of the first clamping member 52 relative to the first clamping member 51. The user adjusts the position of the first clamping members 51 and 52 in the first clamping direction C1 and temporarily fixes their positions using the first fixing members 541 and 542. The positions of the first clamping members 51 and 52 relative to the first pillar 961 are adjusted so that the first clamping member 52 comes into contact with the front surface of the first pillar 961, the extension direction of the upper ends of the first clamping members 51 and 52 becomes parallel to the front-rear direction, which is parallel to the horizontal plane, and the extension surface of the wall section 522 is parallel to the vertical direction. The user then inserts a first bolt 531 from the right through both the hole 517 of the wall section 511 of the first clamping member 51 and the hole 527 of the wall section 521 of the first clamping member 52. Similarly, the user inserts a first bolt 532 through holes 518 and 528, a first bolt 533 through holes 519 and 529, and a first bolt 534 through holes 520 and 530. The first bolts 531 and 534 are shorter than the first bolts 532 and 533.

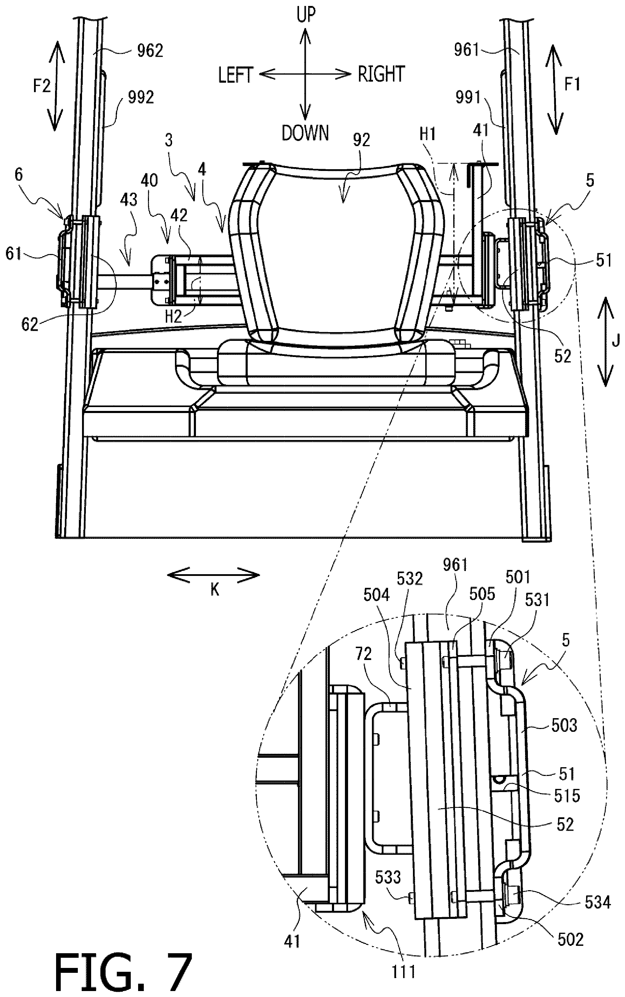

As shown in FIG. 7, the user tightens the first bolts 531 to 534, thereby clamping the first pillar 961 between the first clamping members 51 and 52, and fixing the first fixing section 5 to the first pillar 961. In the front-rear direction, the first pillar 961 is positioned behind the first bolts 531 and 534 and in front of the first bolts 532 and 533. In other words, in the front-rear direction, the first pillar 961 is located between the first bolts 531 and 534 and the first bolts 532 and 533.

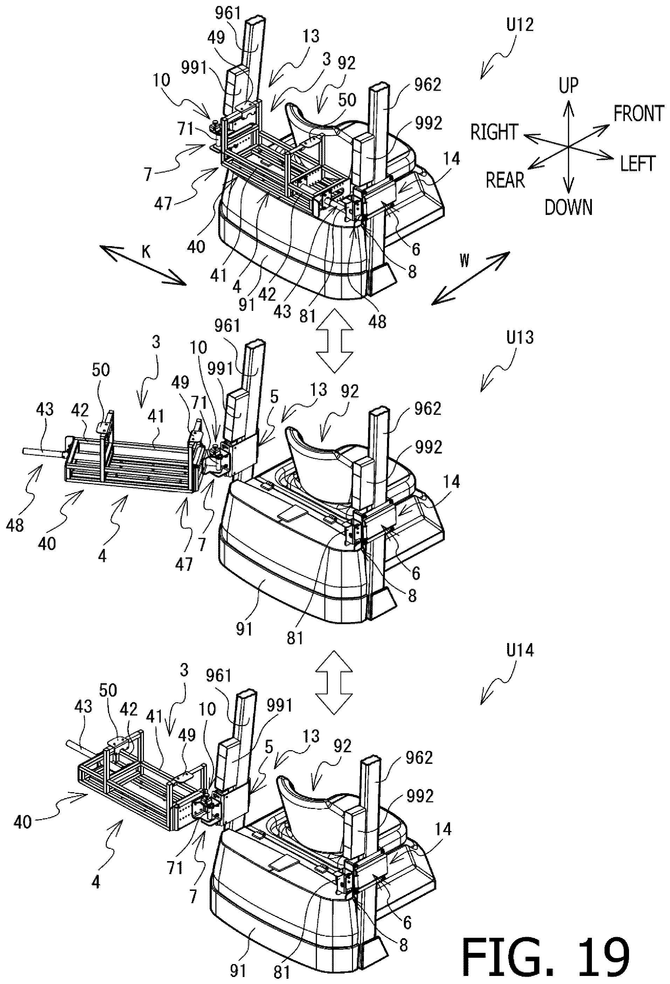

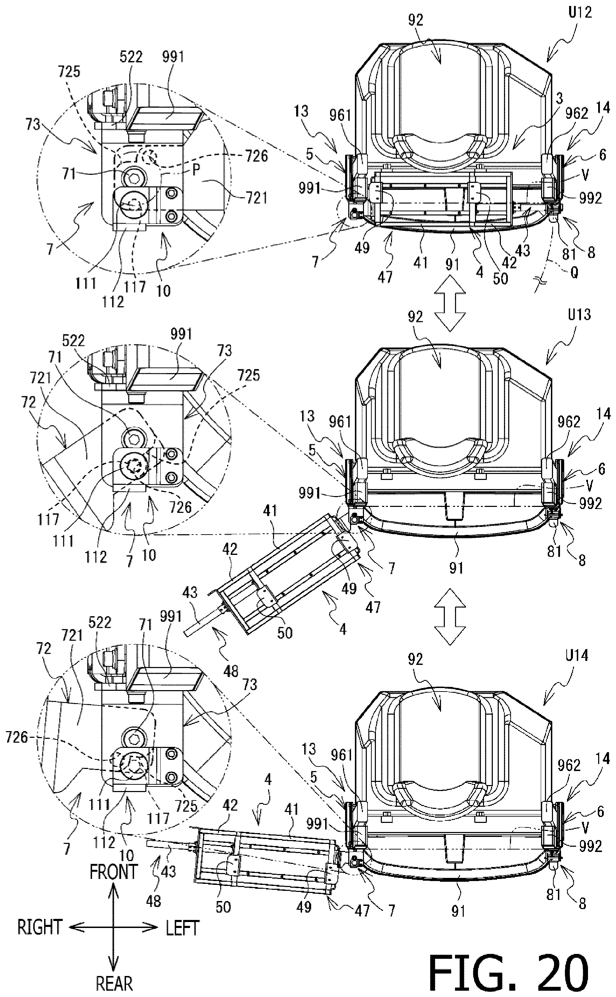

As shown in FIG. 3, the first support member 7 supports the base 4 in such a manner that allows the base 4 to be displaced between a first position and a second position, where the second position is a position in which the base 4 is displaced relative to the first fixing section 5 and the second fixing section 6, based on the first position. In this embodiment, the first support member 7 is connected to both the first fixing section 5 and the first end portion 47 of the base 4, and supports the base 4 in a rotatable manner about a shaft 71 extending in an axial direction J, which intersects the longitudinal direction K of the base 4, allowing the base 4 to be positioned in either the first position or the second position. Furthermore, the first support member 7 also supports the base 4 in a third position, which allows a greater degree of opening relative to the first position than the second position. As shown in state U12 of FIGS. 19 and 20, the first position in this embodiment corresponds to a position where the longitudinal direction K of the base 4 is parallel to an imaginary line segment V, which connects the first pillar fixing section 13 and the second pillar fixing section 14, when the air conditioning system 1 is in the reference position. The imaginary line segment V in this embodiment is a line extending in the left-right direction, connecting the rear surface of the first fixing section 5 and the rear surface of the second fixing section 6. The first position is a state where the holding section 41 is positioned between the first pillar fixing section 13 and the second pillar fixing section 14 in the longitudinal direction K of the base 4. As shown in state U13 of FIGS. 19 and 20, the second position is a state where the base 4 has rotated 145 degrees clockwise in a top view relative to the first position. As shown in state U14 of FIGS. 19 and 20, the third position is a state where the base 4 has rotated 185 degrees clockwise in a top view relative to the first position.

As shown in FIG. 6, the first support member 7 includes a shaft 71, a first member 73, and a second member 72. The shaft 71 extends in the axial direction J, which, in this embodiment, corresponds to the vertical direction. The first member 73 is a C-shaped bent plate member with an open rear side when viewed from the right side. The first member 73 includes wall sections 731 to 733. A wall section 732 is positioned opposite to the rear surface of the first fixing section 5 and extends in a direction parallel to the axial direction J. The wall section 732 is provided with a shaft hole 734, which penetrates in the front-rear direction, and elongated holes 735 and 736. The shaft hole 734 is formed at one end of the wall section 732 in the longitudinal direction K of the base 4. Specifically, the shaft hole 734 is located to the right of the center of the wall section 732 in the left-right direction and is formed at a position corresponding to the hole 525 of the first fixing section 5. The elongated holes 735 and 736 are formed at the opposite end of the wall section 732 in the longitudinal direction K of the base 4, at positions spaced apart from the shaft hole 734 in a direction intersecting the longitudinal direction K. Specifically, the elongated hole 735 is formed in an upper-left position relative to the shaft hole 734, while the elongated hole 736 is formed in a lower-left position relative to the shaft hole 734, with both elongated holes arranged in an arc shape centered around the shaft hole 734, as viewed from the rear. In the vertical direction, the shaft hole 734 is positioned between the elongated holes 735 and 736. The elongated holes 735 and 736 are formed at positions corresponding to the holes 526 and 527 of the first fixing section 5. The wall section 731 extends rearward from the upper end of the wall section 732, while the wall section 733 extends rearward from the lower end of the wall section 732. The wall section 731 has holes 737 and 738, which penetrate in the vertical direction. Additionally, a pair of front-rear holes 123 is formed to the left of hole 737 in the wall section 731. The wall section 733 has a hole 739, which penetrates in the vertical direction and is positioned below hole 737. The second member 72 is positioned between the wall sections 731 and 733.

The first member 73 is fixed to the rear surface of the first fixing section 5. When fixing the first member 73 to the first fixing section 5, the user inserts a first fixing member 543 from the rear through both the shaft hole 734 of the first member 73 and the hole 525 of the first fixing section 5, a the second fixing member 545 from the rear through both the elongated hole 735 of the first member 73 and the hole 526 of the first fixing section 5, and inserts a second fixing member 546 from the rear through both the elongated hole 736 of the first member 73 and the hole 527 of the first fixing section 5. The user rotates the first member 73 about the first fixing member 543 to adjust the angle of the first member 73 relative to the first fixing section 5. Using a spirit level or similar tool placed on the upper surface of the first member 73, the user ensures that the wall section 731 is positioned horizontally. Then, the user secures the first member 73 to the rear surface of the first fixing section 5 by tightening the first fixing member 543 and the second fixing members 545 and 546.

As shown in FIG. 3, the first support member 7 is positioned leftward in the second direction, relative to the right end of the first fixing section 5, along the left-right direction, which follows the imaginary line segment V. In the left-right direction, the first member 73 of the first support member 7 is positioned inside the width range of the first fixing section 5, and the extension range in the left-right direction of the first member 73 is within the extension range of the first fixing section 5 in the same direction. In the vertical direction, the first elongated hole 523 is positioned above the upper surface of the first member 73, while the first elongated hole 524 is positioned below the bottom surface of the first member 73. The elongated holes 735 and 736 are positioned between plate sections 721 and 723 of the second member 72.

As shown in FIGS. 2, 3, and 6, the second member 72 is a C-shaped bent plate member with an open right side when viewed from the rear. The second member 72 includes a wall section 722 and plate sections 721 and 723 and is capable of rotating about the shaft 71 relative to the wall section 732. The wall section 722 faces a first adjustment member 171, which is fixed to the first end portion 47 of the base 4. Near the four corners of the wall section 722, holes 751 penetrating in the left-right direction are formed. The second member 72 is fixed to the first adjustment member 171 by third fixing members 752, which are inserted through the holes 751, as shown in FIG. 3. The plate sections 721 and 723 extend in a direction intersecting the axial direction J. The plate section 721 extends rightward from the upper end of the wall section 722, while the plate section 723 extends rightward from the lower end of the wall section 722. A rearward-recessed notch 724 is formed at the front end of the plate section 721, and a rearward-recessed notch 725 is formed at the front end of the plate section 723. The shapes of the notches 724 and 725 are substantially the same.

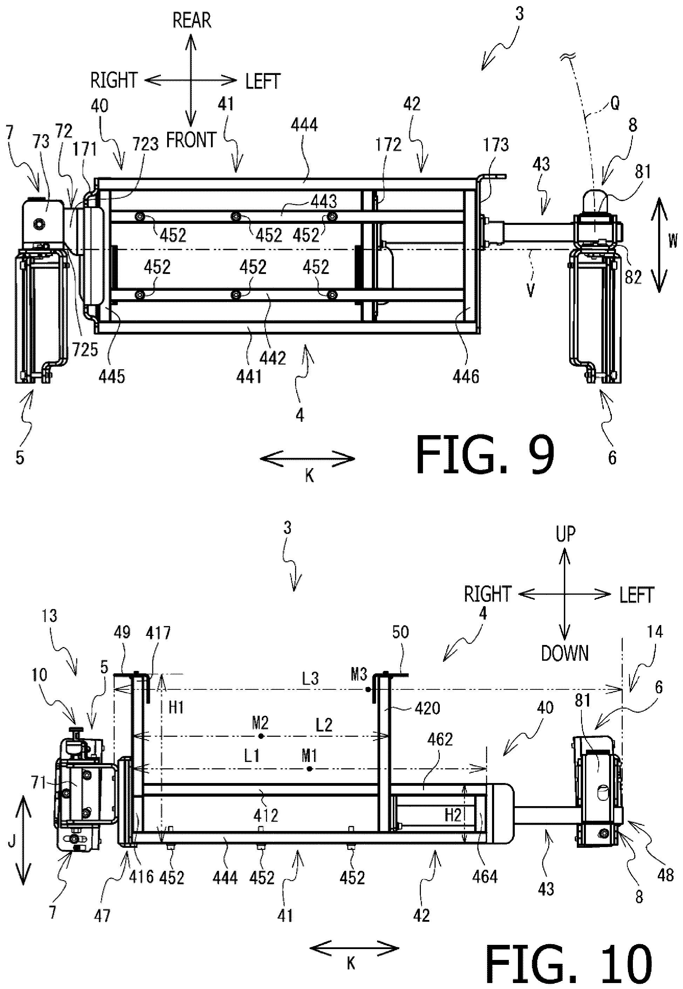

As shown in FIG. 9, when the base 4 is positioned in the first position, the wall section 732 is located at the portion where the notches 724 and 725 are formed, and the notches 724 and 725 face the wall section 732. In this state, in the front-rear direction, the front end of the second member 72 is positioned forward of the rear surface of the first fixing section 5. The notches 724 and 725 allow the base 4 to rotate from the second position toward the first position at a location where the longitudinal direction K of the base 4 is not yet fully parallel to the extension plane of the wall section 732. When the base 4 is in the first position, the direction from the second position toward the first position is the forward direction. In other words, by providing the notches 724 and 725, even if the base 4 rotates a particular angle counterclockwise in a top view from the position where the longitudinal direction K is parallel to the extension plane of the wall section 732, the first member 73 does not interfere with the second member 72. The notches 724 and 725 help reduce situations where the base 4 of the mounting frame 3 cannot be placed in the first position due to twisting or deformation of the first pillar 961 and the second pillar 962 of the vehicle 9. The particular angle, for example, is set within a range of 0 to 5 degrees in terms of the opening angle of the base 4 relative to the first position.

As shown in FIG. 6, the plate section 721 is provided with holes 711 and 726, which penetrate in the vertical direction. The plate section 723 is provided with a hole 727, positioned below the hole 711, and also penetrates in the vertical direction. A tubular shaft 71 extends between the wall sections 731 and 733. The holes 711 and 727 communicate with the hole of the shaft 71. The second member 72 is positioned between the wall sections 731 and 733 such that the hole 711 is located below the hole 737 of the first member 73. The holes 737, 711, 727, and 739 each receive an axial member 74, which extends in the vertical direction. The axial member 74 includes a shaft body 741, a head portion 742, and a fixing portion 743. The head portion 742 is provided at the upper end of the axial member 74. The diameter of the head portion 742 is larger than the diameters of the shaft body 741 and hole 737. The diameter of the shaft body 741 is smaller than the diameter of hole 737. The diameter of the fixing portion 743 is smaller than the diameter of the shaft body 741. A threaded section is formed on the outer circumference of the fixing portion 743. The shaft body 741 is externally fitted with rings 744 and 746. In the vertical direction, the ring 744 is positioned between the wall section 731 of the first member 73 and the head portion 742. Similarly, in the vertical direction, the ring 746 is positioned between the wall section 733 of the first member 73 and the plate section 723 of the second member 72. A nut 745 is fastened onto the fixing portion 743 of the axial member 74. With this configuration, the second member 72 is rotatably supported about the shaft 71 relative to the first member 73.

The second lock mechanism 10 is used to restrict the base 4 from rotating beyond a particular range from each of the second position and the third position. The second lock mechanism 10 is fixed to the upper surface of the first member 73 of the first support member 7. The second lock mechanism 10 includes a second lock member 115, a second lock support section 112, and an urging member 116. The second lock member 115 is a vertically elongated tubular component. The upper end of the second lock member 115 is connected to a disk-shaped operation section 111. The diameter of the operation section 111 is larger than the diameter of the second lock member 115. The second lock support section 112 is a plate-like component with a vertically penetrating hole 113. The lower end of the operation section 111 is inserted through the hole 113. The left end 114 of the second lock support section 112 is bent downward from the surface where the hole 113 is formed. The left end 114 is provided with a pair of front-rear holes 122. The second lock support section 112 is fixed to the upper surface of the first member 73 using a pair of fixing members 121, which are inserted through both the pair of holes 122 of the second lock support section 112 and the pair of holes 123 of the first member 73. The second lock support section 112 supports the second lock member 115 in such a manner that allows the second lock member 115 to move in the vertical direction, which is perpendicular to the longitudinal direction K of the base 4, between a second lock position and a second release position. The second lock position is located below the second release position. Specifically, in the vertical direction, the second lock position is where the lower end 117 of the second lock member 115 is positioned below the upper surface of the plate section 721. The second release position is where the lower end 117 of the second lock member 115 contacts the upper surface of the plate section 721. The urging member 116 urges the second lock member 115 in the downward direction from the second release position to the second lock position. The lower end 117 of the second lock member 115 is inserted into the hole 738 of the first member 73 of the first support member 7. When the second lock member 115 is in the second release position, the lower end 117 of the second lock member 115 contacts the plate section 721 of the second member 72 and presses the plate section 721 downward.

The second lock mechanism 10 restricts the displacement of the base 4 beyond a particular range when the second lock member 115 is in the second lock position. Specifically, in this state, the second lock member 115 is positioned adjacent to at least one of the base 4 in the second position or the first support member 7, thereby preventing the base 4 from moving out of the second position. Additionally, the second lock mechanism 10 also prevents the base 4 from displacing from a third position, which is different from both the first and second positions. In this embodiment, when the base 4 is in the second or third position, the second lock member 115 can be moved into the second lock position. As shown in state U13 of FIG. 20, when the base 4 is in the second position and the second lock member 115 is in the second lock position, the lower end 117 of the second lock member 115 is inserted into the hole 726 of the second member 72, which is connected to the base 4 through the first support member 7. This configuration prevents the base 4 from displacing beyond a particular range from the second position. Similarly, as shown in state U14 of FIG. 20, when the base 4 is in the third position and the second lock member 115 is in the second lock position, the lower end 117 of the second lock member 115 is inserted into the notch 725 of the second member 72 of the first support member 7. This configuration restricts the displacement of the base 4 beyond a particular range from the third position. In other words, when the base 4 is in the second or third position, setting the second lock member 115 in the second lock position causes the second lock member 115to enter the rotation path P of the second member 72, thereby preventing the base 4 from displacing beyond a particular range from a current position. The particular range is defined by the size of the lower end 117 and the dimensions of the hole 726 or the notch 725.

The user can displace the second lock member 115 from the second lock position to the second release position by pushing the operation section 111 upward against the urging force of the urging member 116. When the second lock member 115 is in the second release position, the second lock member 115 is separated from the hole 726 or the notch 725 of the second member 72 of the first support member 7, which is in the second or third position. This allows the base 4 to move out of the second or third position. In other words, when the base 4 is in the second or third position, by setting the second lock member 115 to the second release position, the second lock member 115 is retracted from the rotation path P of the second member 72, thereby the base 4 being allowed to be displaced beyond the particular range from a current position.

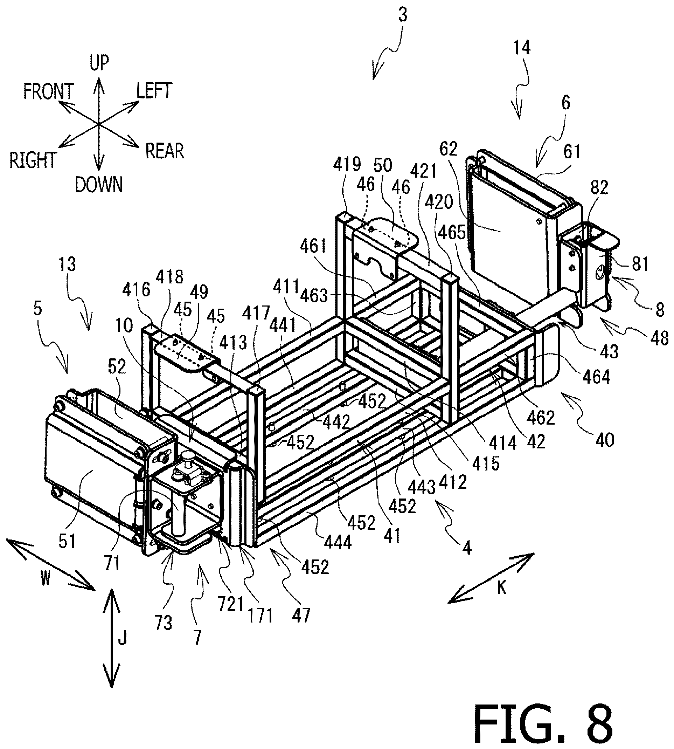

As shown in FIGS. 8 to 14, the base 4 of the mounting frame 3 includes a main body 40, a shaft 43, a width adjustment mechanism 11, and a length adjustment mechanism 12. As shown in FIGS. 8 and 9, the main body 40 is formed by combining multiple structural members, such as square pipes with a square cross-section. The bottom section of the main body 40 includes structural members 441 to 446. The structural members 441 to 444 each extend in the left-right direction and are arranged in order from front to rear. The structural members 442 and 443 each have three fixing members 452 inserted from below at equal intervals in the left-right direction. Each fixing member 452 is inserted into the corresponding fixed portion 17 and fixes the air conditioning device 2 to the holding section 41 from below. The structural members 445 and 446 each extend in the front-rear direction. The structural member 445 is positioned between the structural members 441 and 444 in the front-rear direction and at the right end of the main body 40. The structural member 445 connects the right ends of the structural members 442 and 443. Similarly, the structural member 446 is positioned between the structural members 441 and 444 in the front-rear direction and at the left end of the main body 40. The structural member 446 connects the left ends of the structural members 442 and 443.

As shown in FIGS. 8 to 12, the main body 40 includes structural members 411 to 421, which form the holding section 41. The bottom part of the holding section 41 is formed by the structural members 441 to 445. The holding section 41 is positioned toward the right side in the longitudinal direction K of the mounting frame 3. The air conditioning device 2 is held in an orientation where one side in the longitudinal direction K1 of the housing 21, which includes the air outlet 20, aligns with the right side in the longitudinal direction K of the mounting frame 3. The structural members 411 and 412 extend in the left-right direction. The structural members 413 to 415, 418, and 421 extend in the front-rear direction. The structural members 416, 417, 419, and 420 extend in the vertical direction. The vertical lengths of the structural members 416, 419, and 420 are approximately the same. The vertical length of the structural member 417 is shorter than that of the structural member 416. The lower end of the structural member 416 is connected to the upper surface of the right end of the structural member 441. The lower end of the structural member 419 is connected to the upper surface of the structural member 441 at a position left of the left-right center. The lower end of the structural member 420 is connected to the upper surface of the structural member 444 at a position left of the left-right center. The right end of the structural member 411 is connected to the left surface of the structural member 416 at a particular vertical position. The left end of the structural member 411 is connected to structural member 419 at the particular vertical position. The particular vertical position may be appropriately set depending on the size of the device held by the holding section 41. In this embodiment, the particular vertical position is set below the vertical center of the structural member 416. The structural member 411 is positioned above the structural member 441. The upper surface of the right end of the structural member 412 is connected to the lower end of the structural member 417. The left end of the structural member 412 is connected to the right surface of the structural member 420 at the same vertical position as the structural member 411. The structural member 412 is positioned above the structural member 444. The front end of the structural member 413 is connected to the rear surface of the structural member 416 at the same vertical position as the structural member 411. The rear end of the structural member 413 is connected to the front surface of the structural member 417 at the same vertical position as the structural member 411. The structural member 413 is positioned above the structural member 445. The front end of the structural member 414 is connected to the rear surface of the structural member 419 at the same vertical position as the structural member 411. The rear end of the structural member 414 is connected to the front surface of the structural member 420 at the same vertical position as the structural member 411. The front end of the structural member 415 is connected to the rear surface of the lower end of the structural member 419. The rear end of the structural member 415 is connected to the front surface of the lower end of the structural member 420. The structural member 414 is positioned above the structural member 415.

The front end of the structural member 418 is connected to the upper rear end of the structural member 416, while the rear end of structural member 418 is connected to the upper front end of the structural member 417. The structural member 418 is positioned above the structural member 413. The upper surface of the structural member 418 is provided with a pair of front-rear fixing sections 45. Each of these fixing sections 45 is a threaded hole that fastens a screw for securing the fixture 49 to the holding section 41. The front end of the structural member 421 is connected to the upper rear end of the structural member 419, while the rear end of the structural member 421 is connected to the upper front end of the structural member 420. The structural member 421 is positioned above structural member 414. The upper surface of the structural member 421 is provided with a pair of front-rear fixing sections 46. Each of these fixing sections 46 is a threaded hole that fastens a screw for securing the fixture 50 to the holding section 41. The fixing sections 45 and 46 secure the fixed portions 26 and 27 of the air conditioning device 2 to the holding section 41. In this embodiment, the base 4 is provided with fixing sections 45 and 46 corresponding to the fixed portions 26 and 27, respectively.

The main body 40 includes structural members 461 to 465, which form a connecting section 42. The connecting section 42 is provided on the second direction side of the holding section 41. In this embodiment, the connecting section 42 is connected to the second-direction end of the holding section 41, which is the left end. The bottom part of the connecting section 42 is formed by structural members 441 to 444 and 446. The structural members 461 and 462 extend in the left-right direction. The lengths of the structural members 461 and 462 in the left-right direction are shorter than those of the structural members 411 and 412. The structural member 465 extends in the front-rear direction, and its length in the front-rear direction is approximately the same as that of the structural members 413 and 414. The structural members 463 and 464 extend in the vertical direction, and their lengths in the vertical direction are shorter than those of the structural members 416, 419, and 420. The lower end of the structural member 463 is connected to the upper surface of the left end of the structural member 441, while the lower end of structural member 464 is connected to the upper surface of the left end of the structural member 444. The right end of the structural member 461 is connected to the left surface of the structural member 419 at the same vertical position as the structural member 411. The lower surface of the left end of the structural member 461 is connected to the upper end of the structural member 463. The structural member 461 is positioned above the structural member 441. The right end of the structural member 462 is connected to the left surface of the structural member 420 at the same vertical position as the structural member 411. The lower surface of the left end of the structural member 462 is connected to the upper end of the structural member 464. The front end of the structural member 465 is connected to the rear surface of the left end of the structural member 461 at the same vertical position as the structural member 411, while the rear end of the structural member 465 is connected to the front surface of the left end of the structural member 462 at the same vertical position as the structural member 411. The structural member 465 is positioned above the structural member 446.

As shown in FIGS. 7 and 10, the length H2 of the connecting section 42 in the vertical direction is shorter than the length H1 of the holding section 41. In the vertical direction, the upper end of the holding section 41 is positioned above the upper ends of both the first fixing section 5 and the second fixing section 6. The lower end of the holding section 41 is positioned approximately at the same level as the lower ends of the first fixing section 5 and the second fixing section 6. In the longitudinal direction K of the base 4, a center M2 of the holding section 41 is positioned in the first direction, or rightward, relative to a center M3 of the base 4 and the center M1 of the main body 40. The length L1 of the main body 40 in the longitudinal direction K is greater than half the length L3 of the base 4. The length L2 of the holding section 41 is greater than half the length L1 of the main body 40.

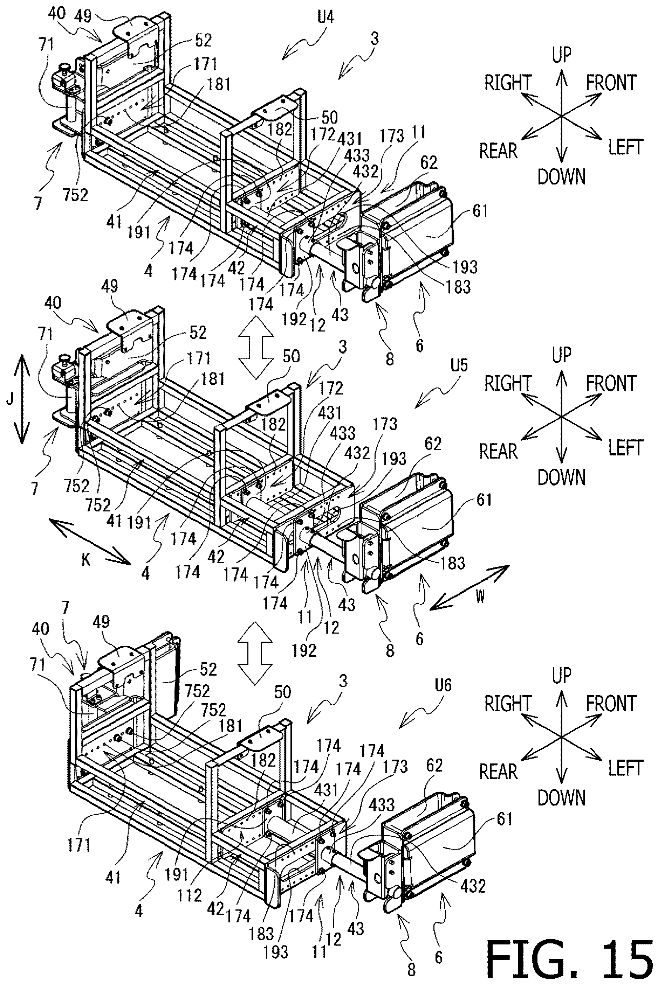

As shown in FIG. 15, the shaft 43 has a cylindrical structure extending along the longitudinal direction K of the mounting frame 3. The right end of the shaft 43 is fixed to a rectangular plate member 191 in a right-side view. The central portion of the shaft 43 is inserted through and fixed to the rectangular plate member 192 in a right-side view. The shaft 43 is fixed to the connecting section 42 of the main body 40 via the width adjustment mechanism 11 and the plate members 191 and 192. The shaft 43 forms a second end portion 48 of the base 4.

The width adjustment mechanism 11 allows for the adjustment of the position of the base 4 relative to the first pillar fixing section 13 and the second pillar fixing section 14 in the width direction W, which is perpendicular to both the longitudinal direction K of the base 4 and the longitudinal direction F1 of the first pillar 961. The width direction W is perpendicular to the axial direction J, which corresponds to the vertical direction. The width adjustment mechanism 11 includes a first adjustment member 171 and second adjustment members 172 and 173. The first adjustment member 171 is fixed to the first end portion 47 of the base 4 in a manner that allows the width position of the base 4 relative to the first pillar fixing section 13 to be adjusted. The first adjustment member 171 has a rectangular plate shape in a right-side view and is fixed to the right end of the main body 40. The first adjustment member 171 has multiple circular holes 181 arranged in the width direction W. These circular holes 181 are aligned in two vertical rows and are spaced evenly in the front-rear direction. The width adjustment mechanism 11 fixes the width position of the first end portion 47 of the base 4 by inserting third fixing members 752 through both the holes 751 of the second member 72 of the first support member 7 and selected ones of the circular holes 181.

The second adjustment members 172 and 173 are fixed to the second end portion 48 of the base 4 in a such manner that allows for adjustment of the width position of the base 4 relative to the second pillar fixing section 14. Alternatively, by adjusting the width position of the second end portion 48 of the base 4 relative to the holding section 41, the width position of the holding section 41 of the base 4 relative to the second pillar fixing section 14 can be modified. In this embodiment, the second adjustment members 172 and 173 adjust the width position of the second end portion 48 of the base 4 relative to the holding section 41, thereby modifying the width position of the holding section 41 of the base 4 relative to the second pillar fixing section 14. The second adjustment member 172 is an elongated rectangular plate extending in the front-rear direction and is fixed to the left surfaces of structural members 414, 415, 419, and 420 of the holding section 41 within the main body 40. The second adjustment member 172 is provided with multiple circular holes 182 arranged in the width direction W. Similar to the circular holes 181, the circular holes 182 are arranged in two vertical rows and spaced evenly in the front-rear direction. The second adjustment member 172 secures the width position of the shaft 43 by inserting third fixing members 174 through both the holes formed near the four corners of the plate member 191 and selected ones of the circular holes 182. Similarly, the second adjustment member 173 is an elongated rectangular plate extending in the front-rear direction and is fixed to the left surfaces of structural members 446 and 463 to 465 of the connecting section 42 within the main body 40. The second adjustment member 173 is provided with multiple circular holes 183 arranged in the width direction W and an elongated hole 193 extending in the width direction W. Like the circular holes 182, the circular holes 183 are arranged in two vertical rows and spaced evenly in the front-rear direction. The elongated hole 193 allows for the insertion of the shaft 43, which is fixed to the plate member 192. The second adjustment member 173 secures the width position of the shaft 43 by inserting third fixing members 174 through both the holes formed near the four corners of the plate member 192 and selected ones of the circular holes 183.

State U4 in FIG. 15 represents the condition where the base 4 is positioned at the most forward location relative to the first pillar fixing section 13 and the second pillar fixing section 14. State U5 represents the condition where the base 4 is positioned one circular hole 181 further rearward from the most forward position but not at the rearmost location. State U6 represents the condition where the base 4 is positioned at the most rearward location relative to the first pillar fixing section 13 and the second pillar fixing section 14. In states U4 to U6, the longitudinal direction K of the base 4, and vertical and left-right positions of the base 4, remain the same. In each of states U4 to U6, the base 4 can be displaced between the first position and the second position.

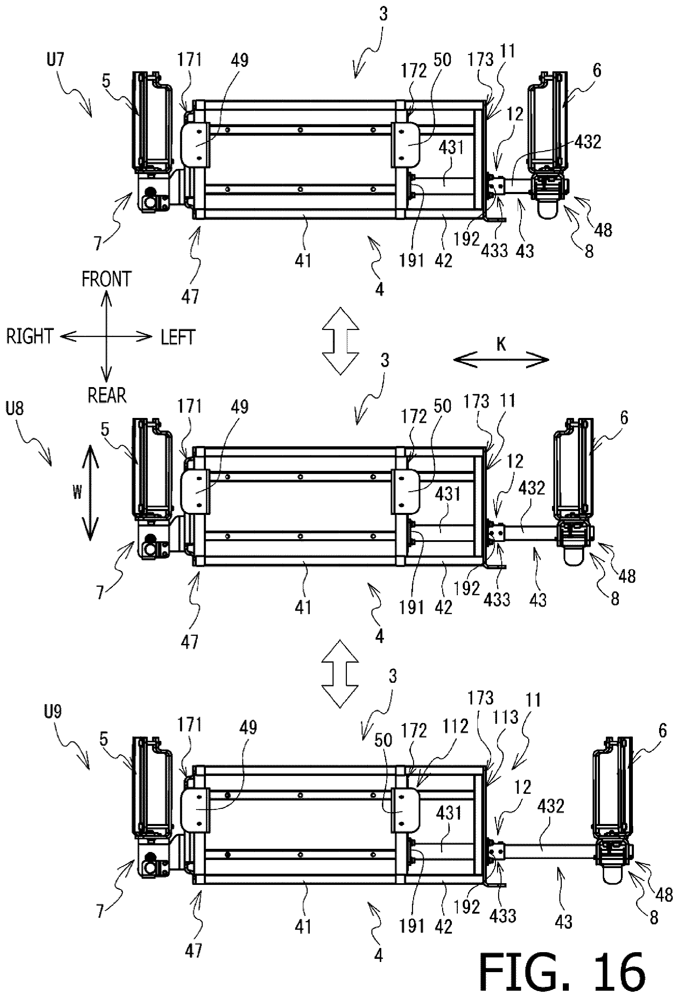

As shown in FIG. 16, the length adjustment mechanism 12 allows for the modification of the length of the base 4 in the longitudinal direction K. The base 4 can be adjusted in length through the length adjustment mechanism 12. This mechanism includes a shaft 43 allowing for the adjustment of the projection amount of the base 4 in the longitudinal direction K from the holding section 41. The base 4 has a connecting section 42 on the second-direction side. The shaft 43 is connected to the connecting section 42 via the width adjustment mechanism 11, allowing for the adjustment of an projection amount of the shaft 43 in the second direction, which is leftward. The shaft 43 includes a first member 431, which has a tubular shape, and a second member 432, which is inserted into the first member 431. By adjusting the overlapping length of the first member 431 and the second member 432 in the longitudinal direction K, the length L3 of the base 4 in the longitudinal direction K (see FIG. 10) is adjustable. In this embodiment, the length adjustment mechanism 12 does not change the length L1 of the main body 40 of the base 4 in the longitudinal direction K, and does not change the length L2 of the holding section 41 in the longitudinal direction K. The length adjustment mechanism 12 includes a fixing section 433 at the left end of the first member 431. The position of the second member 432 relative to the first member 431 is secured using screws provided in the fixing section 433.

State U7 in FIG. 16 represents a condition where the overlapping amount of the first member 431 and the second member 432 in the longitudinal direction K is increased compared to state U8. Conversely, state U9 represents a condition where the overlapping amount of the first member 431 and the second member 432 in the longitudinal direction K is reduced compared to state U8. The base 4 can expand and contract in the longitudinal direction K through the length adjustment mechanism 12. In states U7 to U9, the longitudinal direction K of the base 4 remains the same. In each of states U7 to U9, the base 4 can be displaced between the first position and the second position.

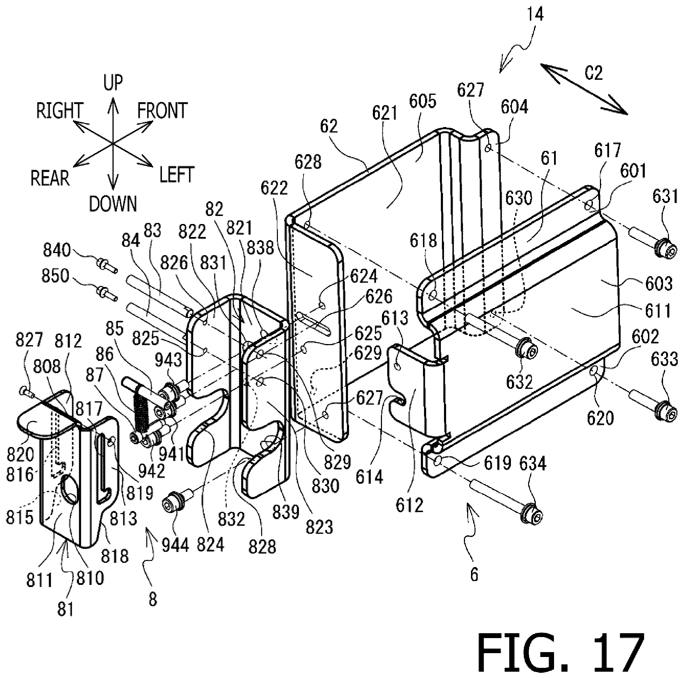

As shown in FIG. 17, the second pillar fixing section 14 secures the second end portion 48 of the base 4, which is located in the second direction opposite to the first direction, to the second pillar 962 of the vehicle 9. The second pillar fixing section 14 is fixed below the lamp 992 on the second pillar 962. In the vertical direction, the upper end of the second pillar fixing section 14 is positioned approximately at the same height as the upper end of the first pillar fixing section 13. The second pillar fixing section 14 includes a second fixing section 6, a second support member 82, and a first lock mechanism 8.

The second fixing section 6 is connected to the second support member 82 and is fixed to the second pillar 962 of the vehicle 9. The second fixing section 6 functions as a clamp that secures the second pillar 962 by clamping the second pillar 962in a second clamping direction C2, which intersects the longitudinal direction F2 of the second pillar 962. The second fixing section 6 includes a pair of second clamping members 61 and 62. In this embodiment, the second clamping direction C2 corresponds to the left-right direction. The second clamping member 61 is positioned on the left side of the second pillar 962, while the second clamping member 62 is positioned on the right side of the second pillar 962.

The second clamping member 61 includes a wall section 611 and a wall section 612. The wall section 611 has a rectangular shape when viewed from the right side. Except for some structural differences, such as a hole 515, the wall section 611 has a structure that is symmetrical to the wall section 511 of the first clamping member 51 in the left-right direction. The upper end 601 and lower end 602 of the wall section 611 are positioned to the right of the central portion 603 in the vertical direction. In the left-right direction, the upper end 601 and lower end 602 are positioned at approximately the same location. The upper end 601 of the wall section 611 is provided with holes 617 and 618, while the lower end 602 of the wall section 611 is provided with holes 619 and 620. Each of the holes 617 to 620 is circular and penetrates in the left-right direction when viewed from the left side. These holes are formed near the four corners of the wall section 611. The wall section 612 extends rightward from the rear end of the wall section 611. The upper end of the wall section 612 is provided with a second shaft hole 613, which penetrates in the front-rear direction. Additionally, the wall section 612 has a notch 614, which is cut out from the right end of the wall section 612 toward the left. The second shaft hole 613 is positioned above the notch 614.

The second clamping member 62 is a bent plate-shaped component that includes a wall section 621 and a wall section 622. The wall section 621 has a rectangular shape when viewed from the right side. The wall section 621 has a structure that is symmetrical to the wall section 521 of the first clamping member 52 in the left-right direction. The front end 604 of the wall section 621 is positioned to the left of the central portion 605 in the front-rear direction. The front end 604 is provided with holes 627 and 630, while the rear end of the central portion 605 is provided with holes 628 and 629. Each of the holes 627 to 630 is circular and penetrates in the left-right direction when viewed from the left side. These holes are formed near the four corners of the wall section 621. The wall section 622 extends leftward from the rear end of the wall section 621. The length of the wall section 622 in the left-right direction is greater than that of the wall section 612. The wall section 622 is positioned behind the wall section 612. The wall section 622 is provided with a second elongated hole 626, which penetrates in the front-rear direction. The second elongated hole 626 is long in the second clamping direction C2, which corresponds to the left-right direction. Additionally, the wall section 622 has circular holes 624, 625, and 627, which penetrate in the front-rear direction when viewed from the rear. The hole 625 is formed to the right of the center of the wall section 622 in the left-right direction, while the holes 624 and 627 are formed to the left of the center in the left-right direction. In the vertical direction, the hole 625 is positioned between the holes 624 and 627.

When fixing the second fixing section 6 to the second pillar 962, the user positions the second clamping member 61 on the left side of the second pillar 962 and the second clamping member 62 on the right side of the second pillar 962. The user places the wall section 612 in front of the wall section 622. The user inserts the second fixing member 941 from the rear through both the second elongated hole 626 of the wall section 622 of the second clamping member 62 and the second shaft hole 613 of the wall section 612 of the second clamping member 61. The second elongated hole 626 allows for positional adjustment of the second clamping member 62 relative to the second clamping member 61. The user adjusts the position of the second pillar 962 in the second clamping direction C2 and temporarily secures the positions of the second clamping members 61 and 62 using the second fixing member 941. The position of the second clamping members 61 and 62 relative to the second pillar 962 is adjusted in such a manner that the second clamping member 62 contacts the front surface of the second pillar 962, the extension direction of the upper ends of the second clamping members 61 and 62 becomes parallel to the front-rear direction, which is parallel to the horizontal plane, and the extension plane of the wall section 622 becomes parallel to the vertical direction. The user then inserts a second bolt 631 from the left through both the hole 617 of the wall section 611 of the second clamping member 61 and the hole 627 of the wall section 621 of the second clamping member 62. Similarly, the user inserts the second bolt 632 through holes 618 and 628, the second bolt 633 through holes 620 and 630, and the second bolt 634 through holes 619 and 629. The second bolts 631 and 633 are shorter than the second bolts 632 and 634. As shown in FIG. 7, the user tightens the second bolts 631 to 634, thereby clamping the second pillar 962 between the second clamping members 61 and 62 and securing the second fixing section 6 to the second pillar 962. In the front-rear direction, the second pillar 962 is positioned behind the second bolts 631 and 633 and in front of the second bolts 632 and 634. In other words, in the front-rear direction, the second pillar 962 is located between the second bolts 631 and 633 and the second bolts 632 and 634.

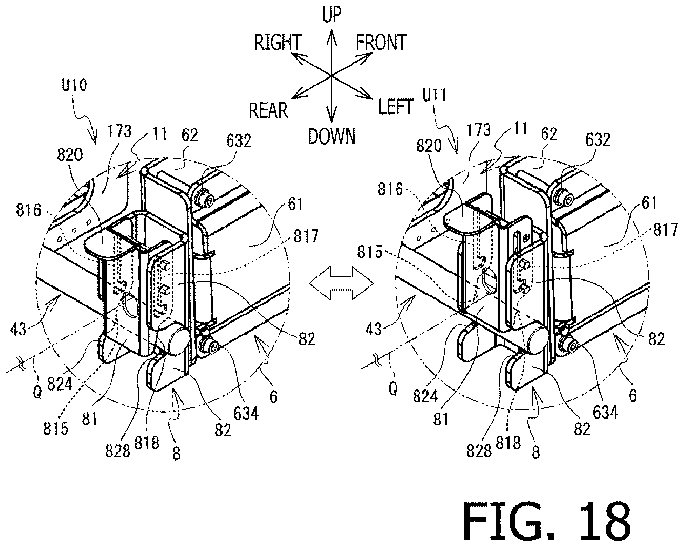

As shown in FIGS. 17 and 18, the second support member 82 is connected to the second fixing section 6 and supports the second end portion 48 of the base 4, specifically the left end of the shaft 43, when the base 4 is in the first position. The second support member 82 is a bent plate-shaped component with a C-shape in a top view, with a rear side of the C-shape open. The second support member 82 includes wall sections 821 to 823. The wall section 821 faces the rear surface of the second fixing section 6. The wall section 821 is provided with a shaft hole 832, elongated holes 838 and 839, and a hole 831, all of which penetrate in the front-rear direction. The shaft hole 832 is formed at one end of the wall section 821 in the longitudinal direction K of the base 4. Specifically, the shaft hole 832 is positioned to the right of the center of the wall section 821 in the left-right direction. The shaft hole 832 is formed at a location corresponding to the hole 625 of the second fixing section 6. The elongated holes 838 and 839 are formed at the other end of the wall section 821 in the longitudinal direction K of the base 4 and are spaced apart in a direction intersecting the longitudinal direction K relative to the shaft hole 832. Specifically, the elongated hole 838 is located at the upper left of the shaft hole 832, while the elongated hole 839 is located at the lower left of the shaft hole 832, both forming an arc centered around the shaft hole 832 when viewed from the rear. In the vertical direction, the shaft hole 832 is positioned between the elongated holes 838 and 839. The elongated holes 838 and 839 are formed at positions corresponding to holes 624 and 627 of the second fixing section 6. The hole 831 accommodates the head of the second fixing member 941, which was used for the temporary fixation of the second clamping members 61 and 62.

The wall section 822 extends rearward from the right end of the wall section 821, while the wall section 823 extends rearward from the left end of the wall section 821. The wall section 822 is provided with a pair of vertically aligned holes 826 and 825, which penetrate in the left-right direction. Additionally, the wall section 822 has a notch 824, which is recessed forward from the rear end. The notch 824 is formed below the pair of holes 826 and 825. The wall section 823 is provided with a pair of vertically aligned holes 829 and 830, which penetrate in the left-right direction. The wall section 823 also has a notch 828, which is recessed forward from the rear end. The notch 828 is formed below the pair of holes 829 and 830. The left end of the shaft 43 of the base 4, when in the first position, is positioned within the notches 824 and 828. The second support member 82 supports the left end of the shaft 43 of the base 4 in the first position via the notches 824 and 828.

The second support member 82 is fixed to the second fixing section 6. When fixing the second support member 82 to the second fixing section 6, the user inserts a first fixing member 942 from the rear through both the shaft hole 832 of the second support member 82 and the hole 625 of the second fixing section 6. The user then inserts the second fixing member 943 from the rear through both the elongated hole 838 of the second support member 82 and the hole 624 of the second fixing section 6. Similarly, the user inserts the second fixing member 944 from the rear through both the elongated hole 839 of the second support member 82 and the hole 627 of the second fixing section 6. Using the first fixing member 942 as a pivot, the user rotates the second support member 82 relative to the second fixing section 6 to adjust an angle of the second support member 82. Using a spirit level or a similar tool, the user ensures that the upper surface of the wall section 821 is positioned horizontally when adjusting the angle of the second support member 82 relative to the second fixing section 6. Once the correct angle is achieved, the user tightens the first fixing member 942 and the second fixing members 943 and 944 to fix the second support member 82 to the rear surface of the second fixing section 6. As shown in FIG. 3, the second support member 82 is positioned within the width range of the first fixing section 5 in the left-right direction along the imaginary line segment V (see FIG. 9), which connects the first pillar fixing section 13 and the second pillar fixing section 14. In other words, the extension range of the second support member 82 in the left-right direction is within the extension range of the second fixing section 6 in the left-right direction.

The first lock mechanism 8 is fixed to the second fixing section 6. The first lock mechanism 8 includes a first lock member 81 and the second support member 82. The first lock member 81 is displaceable between a first lock position and a first release position. The second support member 82 functions as a first lock support section that supports the first lock member 81. The first lock member 81 is a bent plate member with a C-shape in a top view, with a front side of the C-shape open. The first lock member 81 is positioned between the wall sections 822 and 823 of the second support member 82. The first lock member 81 includes wall sections 811 to 813 and an operation section 820. The wall section 811 extends in the axial direction J and faces the wall section 821 of the second support member 82. The wall section 811 has a hole 810 that penetrates in the front-rear direction. The wall section 812 extends forward from the right end of the wall section 811. The wall section 812 is provided with a hole 808 and an L-shaped elongated hole 816 when viewed from the left side. The wall section 813 extends forward from the left end of the wall section 811. The wall section 813 is provided with a hole 819 and an L-shaped elongated hole 817 when viewed from the left side. The holes 808 and 819, and the elongated holes 816 and 817, each penetrate in the left-right direction.

The shaft 85 extends in the left-right direction and is inserted through the hole 819. The right end of the shaft 85 is positioned between the wall sections 812 and 813, and a fixing member 827 is inserted from the right. The shaft 85 supports the upper end of the urging member 86, which is a coil spring. The lower end of the urging member 86 is supported by a fixing member 87, which extends in the front-rear direction and is fixed to the second support member 82. The urging member 86 urges the first lock member 81 in the direction from the first release position to the first lock position. The shaft 83 extends in the left-right direction and is inserted through the elongated holes 816 and 817 and the hole 829. The right end of the shaft 83 is positioned between the wall sections 822 and 823, and a fixing member 840 is inserted from the right. The shaft 84 extends in the left-right direction and is inserted through the elongated holes 816 and 817 and the hole 830. The right end of the shaft 84 is positioned between the wall sections 822 and 823, and a fixing member 850 is inserted from the right. The first lock member 81 is movably supported by the second support member 82 along the elongated holes 816 and 817, allowing displacement in the vertical direction as the shafts 83 and 84 slide within the elongated holes.

The wall section 812 has a contact surface 815, and the wall section 813 has a contact surface 818. When the first lock member 81 is in the first lock position, the contact surfaces 815 and 818 come into contact with the shaft 43 of the base 4 in the first position. The contact surfaces 815 and 818 are inclined toward a side that the first lock member 81 moves from the first release position to the first lock position to a greater extent on the side where the base 4 moves from the first position toward the second position. In this embodiment, in the reference position, the direction in which the base 4 moves from the first position toward the second position is rearward. The direction in which the first lock member 81 moves from the first release position toward the first lock position is downward. That is, the contact surfaces 815 and 818 are inclined downward toward the rear. In a left-side view, the angle formed between the wall section 811 and the contact surfaces 815 and 818 is an acute angle. The operation section 820 extends rearward from the upper end of the wall section 811. The operation section 820 is manipulated by the user when moving the first lock member 81 from the first lock position to the first release position.

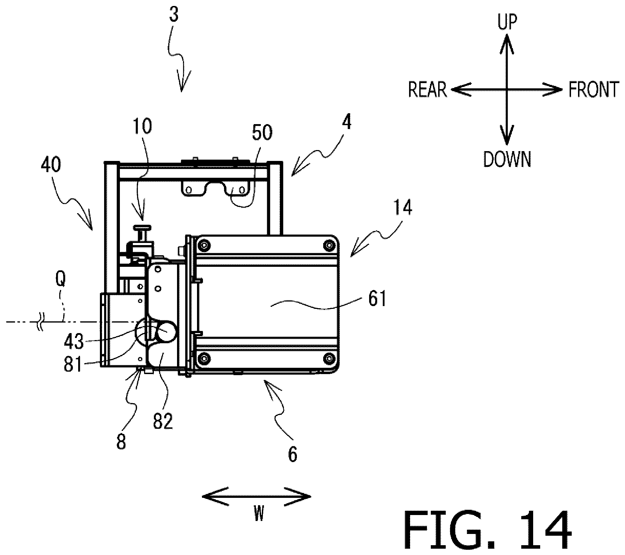

As shown in FIG. 14 and in state U10 of FIG. 18, when the first lock member 81 is in the first lock position, the first lock mechanism 8 prevents the base 4 from displacing from the first position to the second position by positioning the first lock member 81 within the rotation path Q of the base 4. In other words, when the first lock member 81 is in the first lock position, the first lock member 81is positioned adjacent to the shaft 43 of the base 4 in the first position, thereby restricting the displacement of the base 4 from the first position to the second position. The rotation path Q forms an arc centered around the shaft 71 in a top view. When the first lock member 81 is in the first lock position, the first lock member 81 is urged downward by the urging member 86. As a result, the first lock member 81 applies both own weight and the force from the urging member 86 onto the shaft 43, preventing any rattling of the shaft 43. Since the lower surface of the first lock member 81 includes the contact surfaces 815 and 818, which are inclined along the outer circumference of the shaft 43, the first lock member 81 reliably contacts and the shaft 43. The lower ends of the contact surfaces 815 and 818 are positioned below the axial center of the shaft 43. This configuration allows the first lock member 81 to simultaneously press the shaft 43 downward restrict clockwise rotation of the shaft 43 in a top view.

As shown in state U11, when the first lock member 81 is in the first release position, the first lock mechanism 8 allows the first lock member 81 to retract from the rotation path Q, permitting the base 4 to move from the first position to the second position. In other words, when the first lock member 81 is in the first release position, it is separated from the base 4 in the first position, allowing the base 4 to displace from the first position to the second position. When the user wants to move the base 4 from the first position to the second or third position, they operate the operation section 820 to move the first lock member 81 from the first lock position to the first release position against the urging force of the urging member 86. The sections of the notches 824 and 828 that contact the lower outer circumference of the shaft 43 are slightly inclined downward toward the rear. Because of this inclination, once the first lock member 81 is displaced from the first lock position to the first release position, the user can more easily move the shaft 43 rearward. The lower ends of the elongated holes 816 and 817 of the first lock member 81 extend forward. This configuration allows the user to move the first lock member 81 along the elongated holes 816 and 817, holding the first lock member 81 in the first release position against the force of the urging member 86.

Referring to FIGS. 19 and 20, the rotational positions of the base 4 are explained. As shown in state U12 in FIGS. 19 and 20, when the base 4 is in the first position, the extension direction of the imaginary line segment V is parallel to the longitudinal direction K of the base 4. When the base 4 is in the first position, the shaft 43 is restricted by the first lock mechanism 8 from rotating beyond a particular range from the first position. In this state, the right ends of both the first support member 7 and the base 4 are positioned to the left of the right end of the first fixing section 5. The left end of the holding section 41 of the base 4 is positioned to the right of the left end of the driver's seat 92. The left end of the shaft 43 is positioned slightly to the left of the left end of the first lock mechanism 8. In a top view, the main body 40 remains within the extension range of the vehicle body 91.

As shown in state U13, when the base 4 is in the second position, the base 4 is rotated 145 degrees clockwise in a top view relative to the base 4 in the first position. At this point, the second lock member 115 of the second lock mechanism 10 can be displaced from the second release position to the second lock position, allowing a lower end 117 of the second lock member 115 to fit into the hole 726 of the second member 72 of the first support member 7. As a result, the lower end 117 of the second lock member 115 enters the rotation path P of the second member 72, restricting the base 4 from rotating beyond a particular range from the second position. In a top view, the base 4 does not overlap with the vehicle body 91. The extension range of the base 4 in the first position and the extension range of the base 4 in the second position do not overlap in a top view and are separated from each other. Therefore, the user can easily perform tasks such as attaching or detaching the air conditioning device 2 to the holding section 41, inspecting the vehicle 9, or maintaining the air conditioning device 2.

As shown in state U14, when the base 4 is in the third position, the base 4is rotated 185 degrees clockwise in a top view relative to the base 4 in the first position. At this point, the second lock member 115 of the second lock mechanism 10 can be displaced from the second release position to the second lock position, allowing a lower end 117 of the second lock member 115 to fit into the notch 725 of the second member 72 of the first support member 7. As a result, the lower end 117 of the second lock member 115 enters the rotation path P of the second member 72, restricting the base 4 from rotating counterclockwise beyond a particular range from the third position. When the base 4 is in the third position, the wall section 722 of the second member 72 contacts the wall section 732 of the first member 73. This further prevents the base 4 from rotating counterclockwise beyond a particular range in a top view. In this embodiment, the particular range for both the second and third positions is set to less than 1 degree in terms of the opening angle of the base 4 relative to the first position. Since the second lock member 115 is fixed to the upper surface of the first support member 7, the user can easily operate the second lock member 115 while standing behind the vehicle body 91 when rotating the base 4 from the first position toward either the second or third position. Depending on the shape of the vehicle body 91, there may be cases where, in the second position, the base 4 overlaps with the vehicle body 91 in a top view. However, when the base 4 is in the third position, the mounting frame 3 reduces the likelihood of such an overlap in a top view. Therefore, the user can easily perform tasks such as attaching or detaching the air conditioning device 2 to the holding section 41, inspecting the vehicle 9, or maintaining the air conditioning device 2.

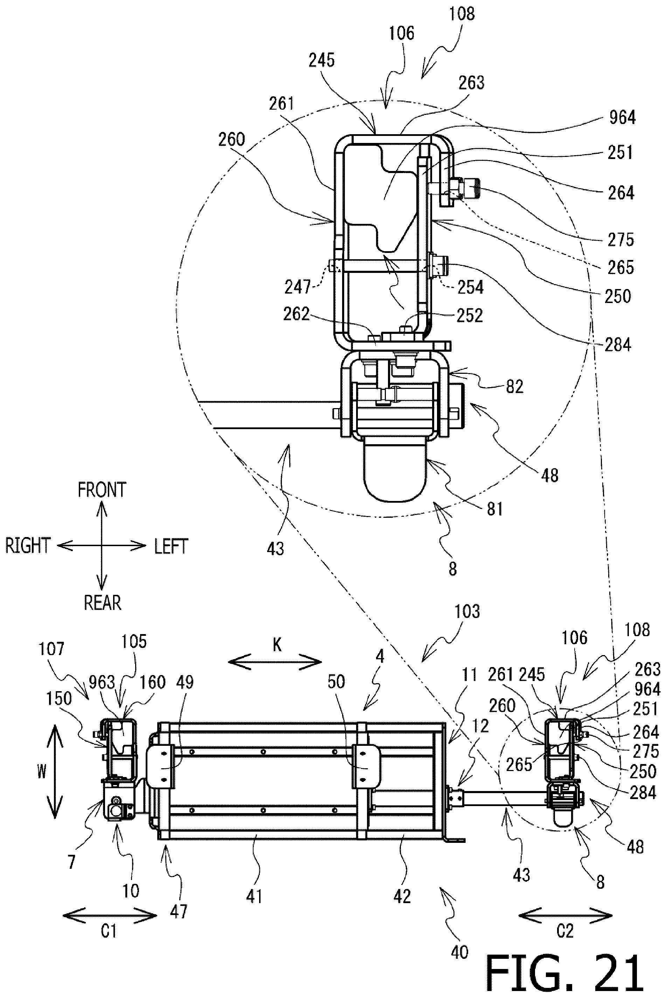

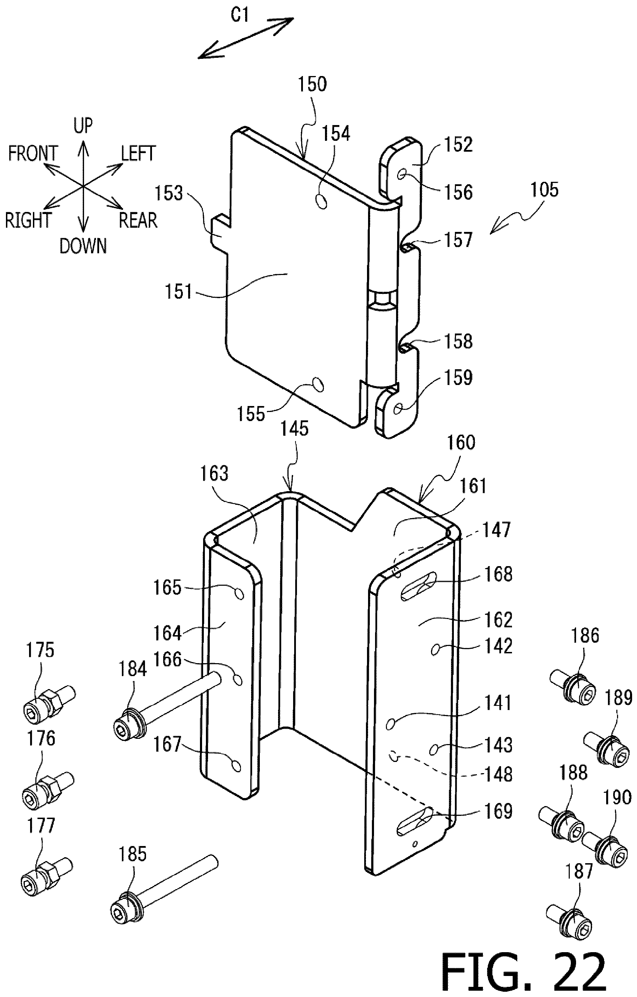

Referring to FIGS. 21 and 22, a modified version of the mounting frame 103 is described. In FIG. 21, components identical to those in the previously described mounting frame 3 are assigned the same reference numerals. As shown in FIG. 21, the modified mounting frame 103 differs from the previously described mounting frame 3 in that the mounting frame 103 has a first pillar fixing section 107 instead of the first pillar fixing section 13 and a second pillar fixing section 108 instead of the second pillar fixing section 14. The first pillar fixing section 107 fixes the first end portion 47 of the base 4, which extends in the first direction along the longitudinal direction K, to a first pillar 963 of the vehicle 9. The second pillar fixing section 108 fixes the second end portion 48 of the base 4, which extends in the second direction along the longitudinal direction K, to a second pillar 964 of the vehicle 9. Unlike the previously described mounting frame 3, the first pillar fixing section 107 is equipped with the first fixing section 105 instead of the first fixing section 5, and the second pillar fixing section 108 is equipped with a second fixing section 106 instead of the second fixing section 6. Below, the differences between the previously described mounting frame 3 and the first fixing section 105 and second fixing section 106 of the modified mounting frame 103 are explained. The first pillar 963 and the second pillar 964 each have a cross-sectional shape different from that of the first pillar 961 and the second pillar 962 in the previously described embodiment, but their longitudinal directions are assumed to be the same.

The first fixing section 105 and the second fixing section 106 are suitable for mounting the mounting frame 103 onto the first pillar 963 and the second pillar 964 of the vehicle 9, where it is necessary to reduce the front-rear length of the first fixing section 105 and the second fixing section 106 less than the first fixing section 5 and the second fixing section 6. Since the first fixing section 105 and the second fixing section 106 have a structure that is symmetrical in the left-right direction except for certain components, the configuration of the first fixing section 105 is explained in detail, while the explanation of the second fixing section 106 is simplified.

As shown in FIG. 22, the first fixing section 105 includes a pair of first clamping members 150 and 160, which secure the first pillar 963 by clamping the first pillar 963 in the first clamping direction C1, which intersects the longitudinal direction F1 of the first pillar 963. The first clamping member 150 is positioned on the right side of the first pillar 963, while the first clamping member 160 is positioned on the left side of the first pillar 963.

The first clamping member 160 is a bent plate member that includes a first bending section 145, a first pressing wall section 164, and a wall section 162. The first bending section 145 includes a wall section 163, which faces the front surface of the first pillar 963, and a wall section 161, which extends rearward from the left end of the wall section 163. The wall section 161 is continuous with the wall section 163 and extends in a direction perpendicular to it. The wall section 161 has a pair of vertically aligned holes 147 and 148. These holes are circular in shape when viewed from the right side and penetrate in the left-right direction. When the first fixing section 105 is secured to the first pillar 963, the wall sections 161 and 163 of the first bending section 145 come into contact with the first pillar 963. Specifically, the wall section 163 contacts the front surface of the first pillar 963, while the wall section 161 contacts the left side surface of the first pillar 963. The first pressing wall section 164 is connected to the first bending section 145 and is positioned apart from the first pillar 963. The first pressing wall section 164 extends rearward from the right end of the wall section 163. The length of the first pressing wall section 164 in the front-rear direction is shorter than that of the opposing wall section 161 in the same direction. The first pressing wall section 164 is provided with first insertion sections 165 to 167, through which first bolts 175 to 177 are inserted along the first clamping direction C1. These insertion sections are arranged at equal intervals in the vertical direction. The front-rear position of the first insertion sections 165 to 167 is determined based on the shape of the first pillar 963. In this embodiment, they are positioned at the location where the left-right width of the first pillar 963 is at the maximum when the wall sections 161 and 163 of the first bending section 145 are in contact with the first pillar 963. The wall section 162 has a structure similar to the wall section 522. Specifically, the wall section 162 includes first elongated holes 168 and 169 and holes 141 to 143, corresponding to the first elongated holes 523 and 524 and holes 525 to 527 in the previously described embodiment.

The first clamping member 150 is a bent plate member that includes a first pressed wall section 151 and a wall section 152. The first pressed wall section 151 is positioned between the first pressing wall section 164 and the first pillar 963 in the first clamping direction C1. The first pressed wall section 151 has a rectangular shape when viewed from the right side. The first pressed wall section 151 is provided with a protrusion 153 and a pair of vertically aligned holes 154 and 155. The protrusion 153 extends forward from the front end of the first pressed wall section 151. The vertical position of the protrusion 153 is near the vertical center of the first pressed wall section 151. The holes 154 and 155 are circular when viewed from the right side and penetrate in the left-right direction. The pair of holes 154 and 155 are formed at positions corresponding to the pair of holes 147 and 148 of the first clamping member 160. The first pressed wall section 151 is pressed against the first pillar 963 by first bolts 175 to 177, which are inserted through the first insertion sections 165 to 167. The wall section 152 has a structure similar to the wall section 512 of the first clamping member 51. Specifically, the wall section 152 includes first shaft holes 156 and 159 and notches 157 and 158, corresponding to the first shaft holes 513 and 514 and the notches 516 and 510 in the previously described embodiment.

When fixing the first fixing section 105 to the first pillar 963, the user places the first clamping member 150 on the right side of the first pillar 963 and the first clamping member 160 on the left side of the first pillar 963. The user positions the wall section 152 in front of the wall section 162. In the first clamping direction C1, the first pressed wall section 151 is positioned between the first pillar 963 and the first pressing wall section 164. The wall section 163 contacts the front surface of the first pillar 963, while the wall section 161 contacts the left side surface of the first pillar 963. The user inserts the first fixing member 186 from the rear through both the first elongated hole 168 of the wall section 162 of the first clamping member 160 and the first shaft hole 156 of the wall section 152 of the first clamping member 150. Similarly, the user inserts the first fixing member 187 from the rear through both the first elongated hole 169 of the wall section 162 of the first clamping member 160 and the first shaft hole 159 of the wall section 152 of the first clamping member 150. The first elongated holes 168 and 169 allow for positional adjustment of the first clamping member 160 relative to the first clamping member 150. The user adjusts the position of the first clamping members 150 and 160 in the first clamping direction C1 relative to the first pillar 963 and temporarily secures them using the first fixing members 186 and 187. The user then inserts the first bolt 184 from the right through both the hole 154 of the first pressed wall section 151 of the first clamping member 150 and the hole 147 of the wall section 161 of the first clamping member 160. Similarly, the user inserts the first bolt 185 from the right through both the hole 155 and the hole 148. The first bolts 184 and 185 are positioned behind the first pillar 963. The user then inserts the first bolts 175 to 177 through the first insertion sections 165 to 167. The first pressed wall section 151 is pressed against the first pillar 963 by the first bolts 175 to 177 inserted through the first insertion sections 165 to 167. As a result, the first pillar 963 is clamped in the first clamping direction C1 by the first pressed wall section 151 and the wall section 161. When the first fixing section 105 is secured to the first pillar 963, no bolts or other fixing members are positioned in front of the first pillar 963. Therefore, the first fixing section 105 has a smaller front-rear size compared to the first fixing section 5.

Since the wall section 162 is provided with holes 141 to 143, when the first support member 7 is fixed to the first fixing section 105, the user inserts the first fixing member 188 from the rear through both the shaft hole 734 of the first member 73 and the hole 141 of the first fixing section 105. Similarly, the user inserts the second fixing member 189 from the rear through both the elongated hole 735 of the first member 73 and the hole 142 of the first fixing section 105, and the second fixing member 190 from the rear through both the elongated hole 736 of the first member 73 and the hole 143 of the first fixing section 105. Using the first fixing member 188 as a pivot, the user rotates the first member 73 to adjust an angle relative to the first fixing section 105 and secures the first fixing section 105 in place.

The second fixing section 106 is symmetrical to the first fixing section 105 in the left-right direction, except for certain structural elements required for attaching the first lock mechanism 8. The second fixing section 106 includes a pair of second clamping members 250 and 260. The second clamping member 250 includes a second bending section 245 and a second pressing wall section 264. The second bending section 245 includes two continuous wall sections 261 and 263. When the second pillar fixing section 108 is secured to the second pillar 964, both of these wall sections 261 and 263 come into contact with the second pillar 964. The second pressing wall section 264 is connected to the second bending section 245, positioned apart from the second pillar 964, and has a second insertion section 265 for inserting a second bolt 275 in the second clamping direction C2. The second clamping member 260 includes a second pressed wall section 251. When the second pillar fixing section 108 is secured to the second pillar 964, the second bolt 285 is inserted from the left through both the hole 254 of the second pressed wall section 251 and the hole 247 of the wall section 261. The second bolt 284 is positioned behind the second pillar 964. In the second clamping direction C2, the second pressed wall section 251 is positioned between the second pressing wall section and the second pillar 964. The second pressed wall section 251 is pressed against the second pillar 964 by the second bolt 275. The second clamping member 260 includes a wall section 262, which has the same structure as the wall section 622 of the second clamping member 62 in the previously described embodiment. Similarly, the second clamping member 250 includes a wall section 252, which has the same structure as the wall section 612 of the second clamping member 61.

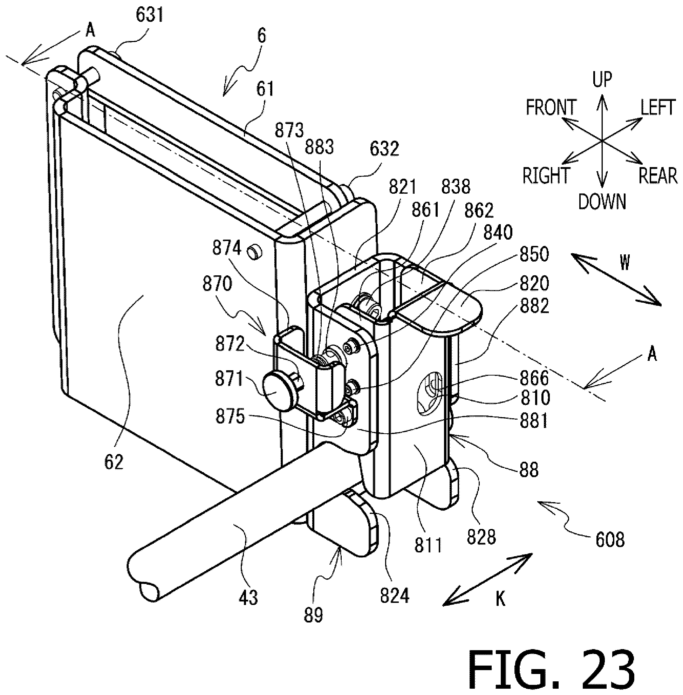

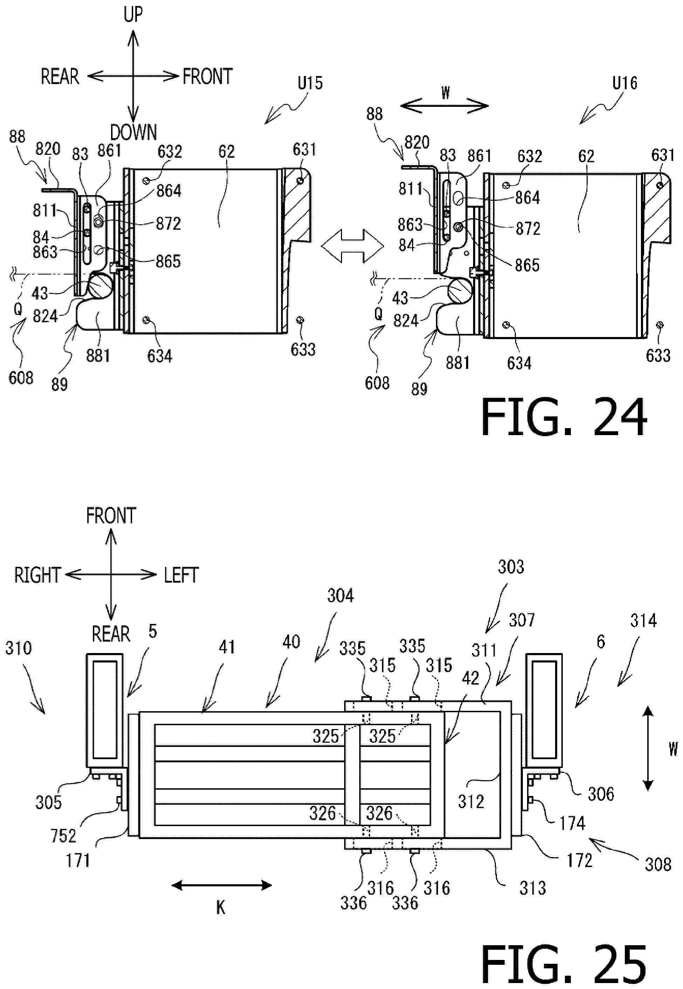

Referring to FIGS. 23 and 24, a modified first lock mechanism 608 is described. In FIGS. 23 and 24, components identical to those in the previously described first lock mechanism 8 are assigned the same reference numerals, and their explanations are simplified or omitted. As shown in FIGS. 23 and 24, the first lock mechanism 608 is provided in the mounting frame 3 instead of the first lock mechanism 8 and is fixed to the second fixing section 6. The first lock mechanism 608 includes a first lock member 88, a second support member 89, and a third lock mechanism 870. The first lock member 88 is displaceable between a first lock position and a first release position. The second support member 89 functions as a first lock support section that supports the first lock member 88. The first lock member 88 is a bent plate member with a C-shape in a top view, with a front side open. The first lock member 88 includes wall sections 811, 861, and 862, and an operation section 820. The wall section 861 extends forward from the right end of the wall section 811, while the wall section 862 extends forward from the left end of the wall section 811. The wall section 861 is provided with an elongated hole 863, which is vertically long when viewed from the left side, an elongated hole 864, and a hole 865. In the vertical direction, the extension range of the elongated hole 863 is longer than that of the elongated hole 864. The wall section 862 is provided with an elongated hole 866, which has the same structure as the elongated hole 863. The elongated holes 863, 864, 866, and the hole 865 each penetrate in the left-right direction.

The second support member 89 is connected to the second fixing section 6 and supports the left end of the shaft 43 when the base 4 is in the first position. The second support member 89 includes wall sections 821, 881, and 882. The wall section 881 extends rearward from the right end of the wall section 821 and includes a contact surface 815. The wall section 882 extends rearward from the left end of the wall section 821 and includes a contact surface 818. In addition to the holes 826 and 825 and the notch 824, which are similar to those in the previously described embodiment, the wall section 881 is provided with a hole 883. In the front-rear direction, the hole 883 is positioned forward of the holes 826 and 825. In the vertical direction, the hole 883 is located between the holes 826 and 825. The wall section 882 is provided with the same holes 829 and 830 and the notch 828 as in the previously described embodiment.

The shaft 83 extends in the left-right direction and is inserted through the elongated holes 863 and 866 and the hole 829. The right end of the shaft 83 is positioned between the wall sections 881 and 882, and a fixing member 840 is inserted from the right. The shaft 84 extends in the left-right direction and is inserted through the elongated holes 863 and 866 and the hole 830. The right end of the shaft 84 is positioned between the wall sections 881 and 882, and a fixing member 850 is inserted from the right. The first lock member 88 is supported by the second support member 89 in such a manner that allows the first lock member 88to move vertically along the elongated holes 863 and 866 as the shafts 83 and 84 slide within them.

The third lock mechanism 870 secures the position of the first lock member 88 in both the first lock position and the first release position in a detachable manner. The third lock mechanism 870 includes a pin 872, an operation section 871, an urging member 873, and a support member 874. The pin 872 is a cylindrical component extending in the left-right direction. The operation section 871 is a disk-shaped component when viewed from the right side and is fixed to the right end of the pin 872. The diameter of the operation section 871 is larger than that of the pin 872. The urging member 873 is a coil spring externally fitted onto the pin 872 to the left of the support member 874. The urging member 873 urges the pin 872 toward the left. The support member 874 is a plate-like component bent into a C-shape in a top view, with a left side open, allowing the pin 872 to move in the left-right direction, which is perpendicular to the downward direction, from the first release position to the first lock position. The operation section 871 is positioned to the right of the support member 874. The lower end of the support member 874 is bent into an L-shape when viewed from the rear and extends parallel to the wall section 881 of the second support member 89. The support member 874 is fixed to the right surface of the second support member 89 and above the notch 824 by a fixing member 875, which is inserted through the lower end of the support member 874.

As shown in state U15 in FIG. 24, when the first lock member 88 is in the first lock position, the first lock mechanism 608 prevents the base 4 from displacing from the first position to the second position by positioning the first lock member 88 within the rotation path Q of the base 4. This restricts the movement of the base 4 from the first position to the second position. When the first lock member 88 is in the first lock position, the pin 872 of the third lock mechanism 870 is inserted through both the hole 883 and the elongated hole 864. This prevents the first lock member 88 from moving beyond a particular range from the first lock position. The particular range is defined by the vertical length of the elongated hole 864 and the diameter of the pin 872. The vertical length of the elongated hole 864 is greater than 1.1 times the diameter of the pin 872 but less than 2 times a diameter of the pin 872. Additionally, the first lock member 88 applies own weight onto the shaft 43, and suppresses any rattling of the shaft 43.

As shown in state U16, when the first lock member 88 is in the first release position, the first lock mechanism 608 allows the first lock member 88 to retract from the rotation path Q, enabling the base 4 to move from the first position to the second position. The first release position is located above the first lock position. When the user wants to move the base 4 from the first position to the second or third position, they first operate the operation section 871 to remove the pin 872 from the elongated hole 864. After that, they operate the operation section 820 to move the first lock member 88 from the first lock position to the first release position. Once the first lock member 88 has been displaced from the first lock position to the first release position, the user inserts the pin 872 of the third lock mechanism 870 into the holes 883 and 865. This allows the user to maintain the first lock member 88 in the first release position.

Referring to FIG. 25, a modified version of a mounting frame 303 is described. In FIG. 25, components identical to those in the previously described mounting frame 3 are assigned the same reference numerals, and their explanations are simplified. As shown in FIG. 25, the modified mounting frame 303 differs from the previously described mounting frame 3 in that the modified mounting frame 303 is equipped with a base 304 instead of the base 4, a first pillar fixing section 310 instead of the first pillar fixing section 13, and a second pillar fixing section 314 instead of the second pillar fixing section 14. The first pillar fixing section 310 includes a first fixing section 5 and a support section 305. The second pillar fixing section 314 includes a second fixing section 6 and a support section 306. The support sections 305 and 306 are L-shaped bent plate members in a top view. The support section 305 is connected to both the first fixing section 5 and the right end of the base 304. The support section 306 is connected to both the second fixing section 6 and the left end of the base 304. The connection method between the support section 305 and the first fixing section 5 is the same as the connection method between the first member 73 and the first fixing section 5 in the previously described embodiment. Similarly, the connection method between the support section 306 and the second fixing section 6 is the same as the connection method between the second support member 82 and the second fixing section 6.

The base 304 includes a main body 40, a length adjustment mechanism 307, and a width adjustment mechanism 308. The length adjustment mechanism 307 is a C-shaped plate member that is open to the right in a top view and includes wall sections 311 to 313. The vertical length of the wall sections 311 to 313 is the same as that of the connecting section 42. The wall sections 311 and 313 extend in the left-right direction while being spaced apart from each other in the front-rear direction. The wall section 312 connects the left ends of the wall sections 311 and 313 in the front-rear direction. The wall section 311 is positioned in front of the main body 40. The wall section 311 is provided with a pair of horizontally elongated slots 315, which are arranged in two vertical rows. The upper row of elongated slots 315 faces the structural member 461, while the lower row faces the structural member 441. The structural members 441 and 461 are each provided with shaft holes 325 corresponding to the elongated slots 315. The fixing members 335 are inserted from the front through both the elongated slots 315 and the corresponding shaft holes 325. Similarly, the wall section 313 is positioned behind the main body 40. The wall section 313 is provided with a pair of horizontally elongated slots 316, which are also arranged in two vertical rows. The upper row of elongated slots 316 faces the structural member 462, while the lower row faces the structural member 444. The structural members 444 and 462 are each provided with shaft holes 326 corresponding to the elongated slots 316. The fixing members 336 are inserted from the rear through both the elongated slots 316 and the corresponding shaft holes 326. When the fixing members 335 are inserted through both the elongated slots 315 and the corresponding shaft holes 325, and the fixing members 336 are inserted through both the elongated slots 316 and the corresponding shaft holes 326, the elongated slots 315 and 316 allow the length adjustment mechanism 307 to move in the left-right direction relative to the main body 40. By shifting the length adjustment mechanism 307 in the left-right direction relative to the main body 40, the mounting frame 303 can adjust the longitudinal length of the base 304 in the K direction.

The width adjustment mechanism 308 includes a first adjustment member 171 and a second adjustment member 172. The first adjustment member 171 is fixed to the right end of the main body 40, while the second adjustment member 172 is connected to the wall section 312 of the length adjustment mechanism 307. The width adjustment mechanism 308 allows the widt position W of the base 304 relative to the second pillar fixing section 314 to be adjusted at the second-direction end of the main body 40, which is the left end. The connection method between the support section 305 and the first adjustment member 171 is the same as the connection method between the second member 72 and the first adjustment member 171 in the previously described embodiment. This connection allows the widt position W of the base 304 relative to the first fixing section 5 and the second fixing section 6 to be adjustable using the third fixing member 752. Similarly, the connection method between the support section 306 and the second adjustment member 172 is the same as the connection method between the plate member 191 and the second adjustment member 172 in the previously described embodiment. This connection allows the widt position W of the base 304 relative to the first fixing section 5 and the second fixing section 6 to be adjustable using a third fixing member 174.

In the above embodiments, the mounting frame 3, base 4, first fixing section 5, second fixing section 6, first support member 7, vehicle 9, width adjustment mechanism 11, length adjustment mechanism 12, first pillar fixing section 13, and second pillar fixing section 14 are each examples of the mounting frame, base, first fixing section, second fixing section, first support member, vehicle, width adjustment mechanism, length adjustment mechanism, first pillar fixing section, and second pillar fixing section of the present invention. The holding section 41, connecting section 42, shaft 43, first end portion 47, second end portion 48, shaft 71, and second support member 82 are each examples of the holding section, connecting section, shaft, first end portion, second end portion, shaft, and second support member of the present invention. The plate members 721 and 723 are examples of the plate members of the present invention. The notches 724 and 725 are examples of the notches of the present invention. The wall section 732 is an example of the wall section of the present invention. The pairs of first clamping members 51 and 52, and the pairs of first clamping members 150 and 160 are each examples of the pair of first clamping members of the present invention. Similarly, the pairs of second clamping members 61 and 62, and the pairs of second clamping members 250 and 260, are each examples of the pair of second clamping members of the present invention. The first bending section 145, first pressed wall section 151, and first pressing wall section 164 are each examples of the first bending section, first pressed wall section, and first pressing wall section of the present invention. The first insertion sections 165 to 167 are each examples of the first insertion section of the present invention. The wall sections 161 and 163 are the two first wall sections of the present invention. The first bolts 175 to 177 and 531 are each examples of the first bolts of the present invention. The first adjustment member 171 is an example of the first adjustment member of the present invention. The second adjustment members 172 and 173 are each examples of the second adjustment member of the present invention. The third fixing member 174 is an example of the third fixing member of the present invention. The multiple circular holes 181, 182, and 183 are each examples of the multiple circular holes of the present invention. The wall sections 261 and 263 are examples of the second wall section of the present invention. The second bending section 245, second pressed wall section 251, second clamping member 260, second pressing wall section 264, and second insertion section 265 are each examples of the second bending section, second pressed wall section, second clamping member, second pressing wall section, and second insertion section of the present invention. The second bolts 275 and 631 are examples of the second bolts of the present invention. The first member 431 and second member 432 are each examples of the first and second members of the present invention. The first fixing members 543 and 942 are examples of the first fixing members of the present invention. The second fixing members 545, 546, 943 and 944 are examples of the second fixing members of the present invention. The plate members 721 and 723 are the plate members of the present invention. The notches 724 and 725 are the notch portions of the present invention. The wall sections 732 and 821 are each examples of the wall sections of the present invention. The shaft holes 734 and 832 are each examples of the shaft holes of the present invention. The elongated holes 735, 736, 838 and 839 are each examples of the elongated holes of the present invention. The first pillar 961 and second pillar 962 are each examples of the first and second pillars of the present invention. The first clamping direction C1, second clamping direction C2, first longitudinal direction K3, second longitudinal direction F1, third longitudinal direction F2, axial direction J, and width direction W are each examples of the first clamping direction, second clamping direction, first longitudinal direction, second longitudinal direction, third longitudinal direction, axial direction, and width direction of the present invention. The imaginary line segment V is an example of the imaginary line segment of the present invention.

The mounting frame 3 in the above embodiment is fixed to an open-cabin type vehicle 9 that includes a first pillar 961 and a second pillar 962. The mounting frame 3 includes a base 4, a first pillar fixing section 13, and a second pillar fixing section 14. The base 4 includes a holding section 41 that holds an object and a length adjustment mechanism 12 that connects to the holding section 41. The length of the base 4 in the longitudinal direction K can be adjusted using the length adjustment mechanism 12. The first pillar fixing section 13 secures the first end portion 47 of the base 4, which extends in the first direction along the longitudinal direction K, to the first pillar 961 of the vehicle 9. The second pillar fixing section 14 secures the second end portion 48 of the base 4, which extends in the second direction opposite to the first direction, to the second pillar 962 of the vehicle 9. The length adjustment mechanism 12 of the mounting frame 3 allows for modifications in the length of the base 4 in the longitudinal direction K, enabling the length adjustment mechanism 12 to be fixed to multiple vehicles 9 with different distances between the first pillar 961 and the second pillar 962.

The length adjustment mechanism 12 includes a shaft 43 that allows modification of the projection amount of the base 4 in the longitudinal direction K from the holding section 41. Compared to a configuration where the entire base 4 is adjusted for length, the mounting frame 3, by utilizing the length adjustment mechanism 12, enables a relatively simpler configuration for adjusting the length.

The base 4 includes a connecting section 42 in the second direction of the holding section 41. The shaft 43 is connected to the connecting section 42 and enables the adjustment of a projection amount in the second direction from the connecting section 42. By adopting this configuration, the mounting frame 3 enables a relatively simple structure for the length adjustment mechanism 12.

The shaft 43 includes a first member 431, which has a tubular shape, and a second member 432, which is inserted into the first member 431. By adjusting the overlapping length of the first member 431 and the second member 432 in the longitudinal direction K, the length of the base 4 in the longitudinal direction K can be adjusted. This configuration allows the mounting frame 3 to have a relatively simple structure for the length adjustment mechanism 12.

The first pillar fixing section 13 includes a first fixing member 543, second fixing members 545 and 546, and a wall section 732. The wall section 732 is positioned to face the first fixing section 5, which is the component to be fixed. The wall section 732 is provided with a shaft hole 734, through which the first fixing member 543 is inserted, and elongated holes 735 and 736, through which the second fixing members 545 and 546 are inserted. When the second fixing members 545 and 546 are inserted, the wall section 732 is allowed to rotate about the first fixing member 543 relative to the first fixing section 5, which is the component being fixed. The second pillar fixing section 14 includes a first fixing member 942, second fixing members 943 and 944, and a wall section 732. The wall section 732 is positioned to face the second fixing section 6, which is the component to be fixed. The wall section 732 is provided with a shaft hole 832, through which the first fixing member 942 is inserted, and elongated holes 838 and 839, through which the second fixing members 943 and 944 are inserted. When the second fixing members 943 and 944 are inserted, the wall section 821 is allowed to rotate about the first fixing member 942 relative to the second fixing section 6, which is the component being fixed. This configuration allows the mounting frame 3 to adjust an installation angle according to the inclinations of the first pillar 961 and the second pillar 962.

The shaft hole 734 is formed at the right end of the wall section 732 in the longitudinal direction K of the base 4. The elongated holes 735 and 736 are formed at the left end of the wall section 732 in the longitudinal direction K of the base 4 and are spaced apart in the vertical direction from the shaft hole 734. Similarly, the shaft hole 832 is formed at the right end of the wall section 821 in the longitudinal direction K of the base 4. The elongated holes 838 and 839 are formed at the left end of the wall section 821 in the longitudinal direction K of the base 4 and are spaced apart in the vertical direction from the shaft hole 832. Due to this configuration, in the first pillar fixing section 13, the impact applied to the first fixing member 543 and the second fixing members 545 and 546 is distributed more effectively compared to a configuration where each of these fixing members is located at either the right or left end of the wall section 732. This configuration helps prevent the first pillar fixing section 13, where the first fixing member 543 and the second fixing members 545 and 546 are inserted, from peeling away from the corresponding first pillar 961. The mounting frame 3 provides the same beneficial effect in the second pillar fixing section 14 as in the first pillar fixing section 13.

The wall section 732 is provided with multiple elongated holes 735 and 736, through which multiple second fixing members 545 and 546 are inserted. Similarly, the wall section 821 is provided with multiple elongated holes 838 and 839, through which multiple second fixing members 943 and 944 are inserted. In the first pillar fixing section 13, compared to a configuration where only one second fixing member is used to secure an elongated hole, the use of multiple second fixing members 545 and 546 helps distribute the impact forces more effectively. This prevents the first pillar fixing section 13, where multiple second fixing members 545 and 546 are inserted, from peeling away from the corresponding first pillar 961. The mounting frame 3 achieves the same effect in the second pillar fixing section 14 as in the first pillar fixing section 13.

The base 4 includes a width adjustment mechanism 11 that allows for adjusting the position of the base 4 in the width direction W, which is perpendicular to both the longitudinal direction K of the base 4 and the longitudinal direction F1 of the first pillar 961. The width adjustment mechanism 11 contributes to modifying the configuration of the base 4 in relation to the first pillar fixing section 13 and the second pillar fixing section 14.

The width adjustment mechanism 11 includes a first adjustment member 171 and second adjustment members 172 and 173. The first adjustment member 171 is fixed to the first end portion 47 of the base 4 in such a manner that the width position W of the base 4 relative to the first pillar fixing section 13 is changeable. The second adjustment members 172 and 173 are fixed to the second end portion 48 of the base 4 in such a manner that the width position W of the base 4 relative to the second pillar fixing section 14 is changeable. Alternatively, the second adjustment members 172 and 173 enable changes to the width position W of the second end portion 48 of the base 4 relative to the holding section 41. Thereby the width position W of the holding section 41 relative to the second pillar fixing section 14 is adjusted. The first adjustment member 171 and the second adjustment members 172 and 173 contribute to simplifying the structure of the width adjustment mechanism 11 in the mounting frame 3.

At least one of the first adjustment member 171 and the second adjustment members 172 and 173 includes multiple circular holes arranged in the width direction W. The first adjustment member 171 has multiple circular holes 181, the second adjustment member 172 has multiple circular holes 182, and the second adjustment member 173 has multiple circular holes 183. The width adjustment mechanism 11 secures the width position W of the base 4 by inserting a third fixing member 174 into one of the multiple circular holes 181 of the first adjustment member 171. Similarly, the width adjustment mechanism 11 secures the width position W of the base 4 by inserting a third fixing member 174 into one of the multiple circular holes 182 of the second adjustment member 172. Likewise, the width adjustment mechanism 11 secures the width position W of the base 4 by inserting a third fixing member 174 into one of the multiple circular holes 183 of the second adjustment member 173. When adjusting the width position W of the base 4 relative to the first pillar fixing section 13 and the second pillar fixing section 14, the user can select the desired circular hole from among the multiple circular holes and insert the third fixing member 174. This configuration improves the ease of performing width adjustments on the mounting frame 3, thereby enhancing usability of the adjustment work.

The first pillar fixing section 13 includes a first support member 7 and a first fixing section 5. The first support member 7 is connected to the first end portion 47 of the base 4 and supports the base 4. The first fixing section 5 is connected to the first support member 7 and is fixed to the first pillar 961 of the vehicle 9. The first support member 7 is positioned at the second direction side relative to an end portion of the first fixing section 5 in the first direction along the direction of the imaginary line segment V, which connects the first pillar fixing section 13 and the second pillar fixing section 14. Therefore, when the first pillar fixing section 13 is secured to the first pillar 961, the first support member 7 does not protrude in the first direction beyond the first fixing section 5 along the imaginary line segment V, which extends in the left-right direction. This configuration prevents any issues that could arise if the first support member 7 extended beyond the first fixing section 5 in the first direction.

The first pillar fixing section 13 includes a pair of first clamping members 51 and 52, which fix the first pillar 961 by clamping the first pillar 961 in the first clamping direction C1, which intersects the longitudinal direction F1 of the first pillar 961. Similarly, the second pillar fixing section 14 includes a pair of second clamping members 61 and 62, which the fix the second pillar 962 by clamping the fix the second pillar 962 in the second clamping direction C2, which intersects the longitudinal direction F2 of the second pillar 962. The mounting frame 3 can be clamped and fixed to both the first pillar 961 and the second pillar 962 using the pair of first clamping members 51 and 52, and the pair of second clamping members 61 and 62. Even if the vehicle 9 does not have a structure specifically configured for mounting the mounting frame 3, this configuration allows for relatively simple attachment.

The first clamping member 51, among the pair of first clamping members 51 and 52, has first shaft holes 513 and 514, through which first fixing members 541 and 542 are inserted. The first clamping member 52, has first elongated holes 523 and 524, which extend in the first clamping direction C1. These elongated holes allow the insertion of the first fixing members 541 and 542 while permitting positional adjustments of the first clamping member 52 relative to the first clamping member 51. The second clamping member 61, among the pair of second clamping members 61 and 62, has a second shaft hole 613, through which the second fixing member 941 is inserted. The second clamping member 62 has a second elongated hole 626, which extends in the second clamping direction C2. This elongated hole allows the insertion of the second fixing member 941 while permitting positional adjustments of the second clamping member 62 relative to the second clamping member 61. Compared to a configuration without the first elongated holes 523 and 524 or the second elongated hole 626, the mounting frame 3 enhances the ease of alignment when clamping the first clamping members 51 and 52 to the first pillar 961 and the second clamping members 61 and 62 to the second pillar 962. The mounting frame 3 improves the operability of the mounting process to install the mounting frame 3 onto the vehicle 9.

The first pillar fixing section 13 includes at least two first bolts 531 to 534, each of which is inserted in the first clamping direction C1 through the pair of first clamping members 51 and 52, thereby securing the first pillar fixing section 13 to the first pillar 961. Similarly, the second pillar fixing section 14 includes at least two second bolts 631 to 634, each of which is inserted in the second clamping direction C2 through the pair of second clamping members 61 and 62, thereby securing the second pillar fixing section 14 to the second pillar 962. Compared to a configuration where only a single first bolt and a single second bolt are used, the mounting frame 3, with multiple bolts 531 to 534 and 631 to 634, provides a stronger clamping force. This allows the pair of first clamping members to firmly secure the first pillar 961 and the pair of second clamping members to firmly secure the second pillar 962, enhancing the overall stability and reliability of the mounting.

The first pillar fixing section 107 of the modified mounting frame 103 includes first bolts 175 to 177. Among the pair of first clamping members 150 and 160, the first clamping member 160 includes a first bending section 145 and a first pressing wall section 164. The first bending section 145 extends in two mutually perpendicular directions and includes two continuous wall sections 161 and 163. When the first pillar fixing section 107 is secured to the first pillar 963, each of these two wall sections 161 and 163 comes into contact with the first pillar 963. The first pressing wall section 164 is connected to the first bending section 145 and is positioned apart from the first pillar 963 when the first pillar fixing section 107 is secured. The first pressing wall section 164 includes first insertion sections 165 to 167, through which first bolts 175 to 177 are inserted in the first clamping direction C1. Among the pair of first clamping members 150 and 160, the first clamping member 150 includes a first pressed wall section 151. When the first pillar fixing section 107 is secured to the first pillar 963, the first pressed wall section 151 is positioned between the first pressing wall section 164 and the first pillar 963 in the first clamping direction C1. The first pressed wall section 151 is pressed against the first pillar 963 by the first bolts 175 to 177. The second pillar fixing section 108 includes a second bolt 275. Among the pair of second clamping members 250 and 260, the second clamping member 260 includes a second bending section 245 and a second pressing wall section 264. The second bending section 245 extends in two mutually perpendicular directions and includes two continuous wall sections 261 and 263. When the second pillar fixing section 108 is secured to the second pillar 964, each of these two wall sections 261 and 263 comes into contact with the second pillar 964. The second pressing wall section 264 is connected to the second bending section 245 and is positioned apart from the second pillar 964 when the second pillar fixing section 108 is secured. The second pressing wall section 264 includes a second insertion section 265, through which the second bolt 275 is inserted in the second clamping direction C2. Among the pair of second clamping members 250 and 260, the second clamping member 250 includes a second pressed wall section 251. When the second pillar fixing section 108 is secured to the second pillar 964, the second pressed wall section 251 is positioned between the second pressing wall section 264 and the second pillar 964 in the second clamping direction C2. The second pressed wall section 251 is pressed against the second pillar 964 by the second bolt 275. By adopting this configuration, the mounting frame 103 allows the first pillar fixing section 107 and the second pillar fixing section 108 to be relatively compact in size.

The first pillar fixing section 13 in the above embodiment is connected to the first end portion 47 of the base 4 and includes a first support member 7, which supports the base 4 in a manner that allows the base 4 to rotate about the shaft 71. The shaft 71 extends in the axial direction J, which is perpendicular to the longitudinal direction K of the base 4. This rotation enables the base 4 to move between a first position and a second position different from the first position. The second pillar fixing section 14 includes a second support member 82, which supports the second end portion 48 of the base 4 in the second direction when the base 4 is in the first position. Since the mounting frame 3 can rotate about the shaft 71, it is not necessary to remove the mounting frame 3 from the vehicle 9 during maintenance or other servicing operations.

The first position is defined as the position where the imaginary line connecting the first pillar fixing section 13 and the second pillar fixing section 14 is parallel to the longitudinal direction K of the base 4. The first support member 7 includes a wall section 732, which extends in a direction parallel to the axial direction J, and plate sections 721 and 723, which extend in a direction intersecting the axial direction J and rotate about the shaft 71 relative to the wall section 732. The plate sections 721 and 723 are provided with notches 724 and 725. These notches allow the base 4 to rotate beyond the position where its longitudinal direction K is parallel to the extension surface of the wall section 732, permitting movement from the second position toward the first position. The mounting frame 3 is capable of being secured even if the positions of the first pillar 961 and the second pillar 962 are twisted relative to the rotational direction of the base 4. Additionally, even in a case where the positions of the first pillar 961 and the second pillar 962 are twisted relative to the rotational direction of the base 4, the base 4 can be rotated to a position where the second end portion 48 is supported by the second support member 82.

In the longitudinal direction K of the base 4, the center of the holding section 41 is positioned either in the first direction or the second direction relative to the center M3 of the base 4. Since the mounting frame 3 is formed in such a manner that the holding section 41 is positioned toward one side in the longitudinal direction K of the base 4, the opposite side, which is the left side of the driver's seat 92, remains relatively unobstructed. As a result, the degree to which the air conditioning system 1 obstructs the driver's rearward view is reduced compared to conventional configuration. In this embodiment, as shown in FIG. 7, the driver of the vehicle 9 has an improved rearward view on the left side of the driver's seat 92, making it easier to check behind the vehicle.

The mounting frame 3 in the above embodiment is fixed to the open-cabin type vehicle 9, which includes a first pillar 961 and a second pillar 962. The mounting frame 3 includes the base 4, the first fixing section 5, the second fixing section 6, the first support member 7, and the first lock mechanism 8. The base 4 includes the holding section 41 that holds an object. The first fixing section 5 is secured to the first pillar 961 of the vehicle 9, while the second fixing section 6 is secured to the second pillar 962. The first support member 7 is connected to both the base 4 and the first fixing section 5, supporting the base 4 in a manner that allows the base 4 to move between a first position and a second position, the latter being a displaced position relative to the first fixing section 5 and the second fixing section 6. The first lock mechanism 8 includes a first lock member 81, which is movable between a first lock position and a first release position. When the first lock member 81 is in the first lock position, the first lock member 81enters the rotation path Q of the base 4 moving from the first position to the second position, thereby restricting the displacement of the base 4 from the first position to the second position. When the first lock member 81 is in the first release position, the first lock member 81 retracts from the rotation path Q, allowing the base 4 to move from the first position to the second position. The first support member 7 of the mounting frame 3 contributes to reducing interference during maintenance work on the vehicle 9 or operations involving the object being held by allowing the base 4 to move between the first and second positions. The first lock mechanism 8 of the mounting frame 3 helps regulate the movement of the base 4 between these positions. Additionally, the first lock mechanism 8 contributes to preventing unintended displacement of the base 4, thereby reducing potential operational issues.

The first support member 7 is connected to both the first fixing section 5 and the first end portion 47 of the base 4 in the first direction along the longitudinal direction K of the base 4. The first support member 7 supports the base 4 in such a manner that allows the first support member 7 to rotate about the shaft 71, which extends in the axial direction J perpendicular to the longitudinal direction K. The mounting frame 3 includes a second support member 82, which is connected to the second fixing section 6 and supports the second end portion 48 of the base 4 in the second direction, opposite to the first direction, when the base 4 is in the first position. Compared to a configuration where the base 4 moves between the first and second positions via sliding displacement, this rotational configuration allows the base 4's second end portion 48 to move with a simpler configuration. The power section 39 of the air conditioning device 2 extends from the right side surface of the air conditioning device 2 in the longitudinal direction K on the side of the shaft 71. Since the power section 39 of the air conditioning device 2 is inserted through the first elongated hole 524 of the first fixing section 5, the harness can be arranged around the first pillar 961 near the shaft 71. This positioning makes it easier to rotate the mounting frame 3 while keeping the harness connected to the vehicle 9.

The first lock mechanism 8 is fixed to the second fixing section 6. When the first lock member 81 is in the first lock position, the first lock member 81 enters the rotation path Q, restricting the rotation of the base 4 from the first position to the second position. When the first lock member 81 is in the first release position, the first lock member 81 retracts from the rotation path Q, allowing the base 4 to rotate from the first position to the second position. Since the first lock mechanism 8 restricts the rotation of the base 4 in the first lock position by placing the first lock member 81 directly within the rotation path Q, rotation of the base 4 can be stably restricted compared to configuration where the first lock member 81 is positioned near the shaft 71.

The base 4 is connected to the holding section 41 and includes a shaft 43 that extends in the second direction from the holding section 41. The second support member 82 supports the shaft 43 when the base 4 is in the first position. The rotation path Q represents the trajectory of the shaft 43 as the base 4 moves from the first position to the second position. Since the first lock mechanism 8 of the mounting frame 3 only needs to support the shaft 43 when the base 4 is in the first position, the configuration can be made relatively simple compared to a configuration where the second end portion 48 of the base 4 includes a structure other than the shaft 43, such as the main body 40.

The first lock member 81 includes contact surfaces 815 and 818, which come into contact with the shaft 43 of the base 4 when the first lock member 81 is in the first lock position. The contact surfaces 815 and 818 are inclined toward a side where the first lock member 81 moves from the first release position to the first lock position to a greater extent on a side where the base 4 moves from the first position to the second position. With this configuration, the first lock member 81 of the mounting frame 3 can securely and stably engage with the shaft 43 when the base 4 is in the first position, ensuring reliable locking.

The first position is defined as the position where an imaginary line V, which connects the first fixing section 5 and the second fixing section 6, is parallel to the longitudinal direction K of the base 4. The first support member 7 is fixed to the first fixing section 5 and includes a wall section 732 that extends in a direction parallel to the axial direction J, and plate sections 721 and 723 that extend in a direction intersecting the axial direction J and rotate about the shaft 71 relative to the wall section 732. The plate sections 721 and 723 are provided with notches 724 and 725. These notches allow the base 4 to rotate beyond the position where the longitudinal direction K is parallel to the extension surface of the wall section 732, permitting movement from the second position toward the first position. Even in cases where the positions of the first pillar 961 and the second pillar 962 are twisted relative to the rotational direction of the base 4, the mounting frame 3 allows the base 4 to rotate until the second end portion 48 reaches a position where the second end portion 48 can be supported by the second support member 82.

The first lock mechanism 8 includes a second support member 82 that supports the first lock member 81 in such a manner that allows the second support member 82 to move in the axial direction J between the first lock position and the first release position. Compared to a configuration where the first lock member 81 is not supported by the second support member 82, the mounting frame 3 enables easier operation when moving the first lock member 81 between the first release position and the first lock position.

The first lock mechanism 8 includes an urging member 86 that urges the first lock member 81 in the direction from the first release position toward the first lock position. With this configuration, even when force is applied in the displacement direction of the base 4, the mounting frame 3 prevents the first lock member 81 from moving from the first lock position to the first release position, ensuring stable locking.

At least one of the base 4 and the first support member 7, specifically the first support member 7, includes a plate section 721 that moves together with the base 4. The mounting frame 3 is equipped with a second lock mechanism 10, which includes a second lock member 115 that can move between a second lock position and a second release position. When the second lock member 115 is in the second lock position and the base 4 is in the second position, the second lock member 115 enters the rotation path P of the plate section 721 as the base 4 moves from the second position to the first position. This restricts the displacement of the base 4 from the second position to the first position. When the second lock member 115 is in the second release position, the second lock member 115 retracts from the rotation path P, allowing the base 4 to move from the second position to the first position. Since the mounting frame 3 can maintain the base 4 in the second position, user convenience during maintenance work on the vehicle 9 and works when securing objects in place are enhanced.

The second lock mechanism 10 includes a second lock support section 112, which supports the second lock member 115 in such a manner that allows the second lock member 115 to move between the second lock position and the second release position in a direction perpendicular to the longitudinal direction K of the base 4. With this configuration, the mounting frame 3 makes it easy to operate the second lock member 115 when moving the second lock member 115 between the second release position and the second lock position.

The first support member 7 is connected to both the first fixing section 5 and the first end portion 47 of the base 4 in the first direction along the longitudinal direction K. The first support member 7 supports the base 4 in a manner that allows the base 4 to rotate about the shaft 71, which extends in the axial direction J perpendicular to the longitudinal direction K. The second lock mechanism 10 is positioned on the first support member 7. Since the second lock mechanism 10 is arranged near the shaft 71, the mounting frame 3 allows the user to easily access the second lock member 115, enhancing usability and making locking and unlocking operations more convenient.

The first support member 7 is connected to both the first fixing section 5 and the first end portion 47 of the base 4 in the first direction along the longitudinal direction K. The first support member 7 supports the base 4 in a manner that allows the base 4 to rotate about the shaft 71, which extends in the axial direction J perpendicular to the longitudinal direction K. The mounting frame 3 includes a second support member 82 and a second lock mechanism 10. The second support member 82 is connected to the second fixing section 6 and supports the second end portion 48 of the base 4 in the second direction, opposite to the first direction, when the base 4 is in the first position. At least one of the base 4 and the first support member 7, specifically the first support member 7, includes a plate section 721 that moves together with the base 4. The mounting frame 3 includes a second lock mechanism 10, which includes a second lock member 115 movable between a second lock position and a second release position. When the second lock member 115 is in the second lock position and the base 4 is in the second position, the second lock member 115 enters the rotation path P of the plate section 721, thereby restricting the movement of the base 4 from the second position to the first position. Conversely, when the base 4 is in the second position and the second lock member 115 is in the second release position, the second lock member 115 retracts from the rotation path P, allowing the base 4 to rotate from the second position to the first position. Additionally, when the second lock member 115 is in the second lock position and the base 4 is in a third position with a greater degree of opening relative to the reference than the second position, the second lock member 115 enters the rotation path P of the plate section 721. This restricts the movement of the base 4 from the third position to the second position. If the base 4 is in the third position and the second lock member 115 is in the second release position, the second lock member 115 retracts from the rotation path P, allowing the base 4 to rotate from the third position to the second position. Compared to configurations where the base 4 cannot rotate up to the third position, the mounting frame 3 reduces the likelihood of overlap between the base 4 and the vehicle body 91 in a plan view. Furthermore, the mounting frame 3 improves user convenience during maintenance work on the vehicle 9 or when securing objects, both when the base 4 is in the second position and when the base 4 is in the third position.

The first fixing section 5 is a clamp that holds and secures the first pillar 961 in the first clamping direction C1, which intersects the longitudinal direction F1 of the first pillar 961. Similarly, the second fixing section 6 is a clamp that holds and secures the second pillar 962 in the second clamping direction C2, which intersects the longitudinal direction F2 of the second pillar 962. With this configuration, the mounting frame 3 allows for easy attachment to the vehicle 9, making the installation process more efficient and user-friendly.

The base 4 is extendable and retractable in the longitudinal direction K of the base 4. This allows the mounting frame 3 to be secured to multiple vehicles 9, each with different distances between the first pillar 961 and the second pillar 962.

In the longitudinal direction K of the base 4, the center M2 of the holding section 41 is positioned either in the first direction or the second direction, which is the opposite side of the first direction, relative to the center M3 of the base 4. Since the holding section 41 is placed toward one side in the longitudinal direction K of the base 4, the degree to which the air conditioning system 1 obstructs the driver's rearward view compared to conventional configuration is reduced in the side where the holding section 41 is not positioned, specifically, the left side of the driver's seat 92. As shown in FIG. 7 of this embodiment, the driver has better visibility when looking behind from the left side of the driver's seat 92.

In the modified example, the first lock mechanism 608 includes a pin 872, which is inserted into the first lock member 88, perpendicular to the direction in which the first lock member 88 moves from the first lock position to the first release position. This pin 872 regulates the displacement of the first lock member 88 from the first lock position to the first release position. Therefore, the first lock mechanism 608 contributes to maintaining the first lock member 88 in the first lock position. The first lock mechanism 608 prevents unintended movement of the first lock member 88. The third lock mechanism 870 of the first lock mechanism 608 is located on the right side of the second support member 89, which is situated between the first fixing section 5 and the second fixing section 6 in the lateral direction. This placement ensures that the first lock mechanism 608, compared to when the third lock mechanism 870 is located on the left side of the second support member 89, does not interfere with the vehicle 9's operation and driving.

The air conditioning system 1 in the above embodiment includes the air conditioning device 2 and the mounting frame 3. The air conditioning device 2 includes a housing 21, a power section 39, an air outlet 20, a fan 38, and fixed portions 26 and 27. The power section 39 includes a power harness extending from one end of the housing 21 in the longitudinal direction K1, and a power battery. The air outlet 20 is positioned at one end of the housing 21 in the longitudinal direction K1. The fan 38, driven by the power supplied by the power section 39, blows air from the air outlet 20 to the outside of the housing 21. The mounting frame 3 is fixed to an open-cabin type vehicle 9, which includes first pillar 961 and second pillar 962. The mounting frame 3 includes a base 4, a first pillar fixing section 13, and a second pillar fixing section 14. The base 4 includes a holding section 41 and fixing sections 45 and 46. The holding section 41 is positioned toward one side in the longitudinal direction K2 of the mounting frame 3, and the holding section 41 holds the air conditioning device 2 in a posture where one side of the housing 21 in the longitudinal direction K1 aligns with one side of the mounting frame in the longitudinal direction K2. The fixing sections 45 and 46 secure the fixed portions 26 and 27 of the air conditioning device 2 to the holding section 41. The first pillar fixing section 13 fixes the first end portion 47 of the base 4 in the first direction of the longitudinal direction K2 to the first pillar 961 of the vehicle 9. The second pillar fixing section 14 fixes the second end portion 48 of the base 4 in the second direction, opposite the first direction, to the second pillar 962 of the vehicle 9. When the air conditioning system 1 is mounted on an open-cabin type vehicle 9, the air conditioning system 1 contributes to improving the driver's visibility on the side of the vehicle 9 opposite to the side of the mounting frame 3, compared to the conventional configration.

The air conditioning device 2 is held by the holding section 41 in a posture where the air outlet 20 is positioned at one end of the housing 21 in the longitudinal direction K1 on the upper side of the housing. When the air conditioning system 1 is fixed to an open-cabin type vehicle 9 with first pillar 961 and second pillar 962, compared to a configuration where the air outlet 20 is arranged in the front, rear, left, and right directions, this configuration contributes to reducing the space occupied by the air conditioning system 1 in the front, rear, and left-right directions.

The power section 39 includes a power harness that extends from the side 37 of the housing 21, positioned on one side of the longitudinal direction K1 of the housing. With this configuration of the air conditioning system 1, when connecting the power harness to the power supply mounted on the vehicle 9 on the side of the first pillar 961, the length of the power harness can be kept relatively short, simplifying the wiring of the power harness.

The housing 21 includes multiple fixed portions, specifically fixed portions 26 and 27. The base 4 is equipped with corresponding fixing sections 45 and 46 for each of the fixed portions 26 and 27. Compared to a configuration where only a single set of fixing sections is used, the air conditioning system 1 provides more stable attachment of the housing 21 to the mounting frame 3. When the air conditioning system 1 is installed on an open-cabin type vehicle 9, it distributes the impact forces applied to the fixed portions 26 and 27 and the corresponding fixing sections 45 and 46 across multiple sets, reducing the load on any single attachment point and enhancing overall stability.

The first pillar fixing section 13 of the mounting frame 3 is connected to the first end portion 47 of the base 4 and includes a first support member 7, which supports the base 4 in a manner that allows the base 4 to rotate about a shaft 71 extending in the axial direction J, which intersects the longitudinal direction K2. The base 4 can move between a first position and a second position that differs from the first position. The second pillar fixing section 14 includes a second support member 82, which supports the second end portion 48 of the base 4 in the second direction when the base 4 is in the first position. Since the mounting frame 3 allows rotation about the shaft 71, it is not necessary to remove the frame from the vehicle 9 during maintenance of the vehicle 9 or similar operations,.

The base 4 is connected to the end of the holding section 41 in the second direction and includes a connecting section 42, which is shorter in the vertical direction than the length H1 of the holding section 41. Compared to a configuration where the air conditioning system 1 includes a connecting section 42 that is equal to or greater than the length H1 in the vertical direction, the driver's visibility on the opposite side of the mounting frame 3 in the longitudinal direction K2 is improved.

The air conditioning device 2 includes a cooling section 36 that cools the air and a tank 24 that holds the liquid to be supplied to the cooling section 36. In the air conditioning system 1, which includes an air conditioning device 2 with both the cooling section 36 and the tank 24, the driver's visibility on the opposite side of the mounting frame 3 in the longitudinal direction K2 of the vehicle 9 is improved.

At least a part of the tank 24 is positioned facing one side in the width direction W, which intersects both the vertical direction and the longitudinal direction K1 of the air conditioning device 2. Compared to a configuration where the tank 24 is positioned only on the other side in the width direction W, the air conditioning system 1 allows the user to access the tank 24 more easily from one side in the width direction W.

The largest surface of the tank 24 forms one side of the housing 21 in the width direction W. Compared to a configuration where the largest surface of the tank 24 does not form one side of the housing 21 in the width direction W, the air conditioning system 1 allows the user to access the tank 24 more easily from one side in the width direction W.

The tank 24 is detachable from the housing 21. Compared to a configuration where the tank 24 is not detachable from the housing 21, the air conditioning system 1 enhances user convenience when supplying liquid to the tank 24.

The air conditioning system 1 includes fixtures 49 and 50, which are detachably fixed to the fixed portions 26 and 27 of the housing 21 and the fixing sections 45 and 46 of the mounting frame 3. The fixed portions 26 and 27 of the housing 21 are fixed to the fixing sections 45 and 46 via the fixtures 49 and 50. Compared to a configuration without the fixtures 49 and 50, the air conditioning system 1 improves work efficiency when attaching the housing 21 to the mounting frame 3.

The air conditioning device 2 includes a handle 30 that is detachably secured to the fixed portions 26 and 27 when the fixed portions 26 and 27 are not secured to the holding section 41 of the mounting frame 3. Compared to a configuration where the handle 30 is not attachable, the air conditioning system 1 enhances user convenience when used in both situations where the air conditioning device 2 is fixed to the mounting frame 3 and where the air conditioning device 2 is not fixed to the mounting frame 3.

The base 4 includes a length adjustment mechanism 12 that allows the length of the mounting frame 3 in the longitudinal direction K2 to be modified. The air conditioning system 1 can be fixed to any of multiple vehicles 9, each with different distances between the first pillar 961 and the second pillar 962.

The present invention is not limited to the above-described embodiments and may undergo various modifications. The installation direction of the mounting frame 3 on the vehicle 9 is not restricted to the configuration where the longitudinal direction K of the mounting frame 3 aligns with the lateral direction of the vehicle 9. For example, the longitudinal direction K of the mounting frame 3 may be aligned with the front-rear direction of the vehicle 9. In other words, the mounting frame 3 may be installed spanning between the pillar 951 and the first pillar 961. Furthermore, the open-cabin type vehicle 9 to which the mounting frame 3 is attached is not limited to forklifts but may also include vehicles such as golf carts, construction machinery (e.g., compact excavators), and similar types of equipment.

The air conditioning device 2, which is mounted on the vehicle 9 via the mounting frame 3, is not limited to a spot cooler, and the air conditioning device 2 may also be a heater, dehumidifier, air purifier, mist spraying device, or another type of air conditioning equipment. The internal configuration of housing 21 may be modified as necessary depending on the type of air conditioning device. Instead of the air conditioning device 2, the mounting frame 3 may hold various items vehicle-related accessories such as a spare battery for the vehicle 9 and the air conditioning device 2, and objects belonging to the driver such as pens, documents, and beverages. The position of the air outlet 20, the power section 39, and the tank 24 relative to the housing 21 may also be modified as necessary. For example, the air outlet 20 may be located on the front, rear, right, left, or bottom surface of housing 21. If the power section 39 is a battery, a harness may not be required. If the power section 39 is a power harness, the power harness may be directly connected to a portable power source (battery) or connected via an AC/DC converter. Additionally, the power section 39 may extend from the front, left, top, bottom, or rear surface of housing 21. It is also possible for the power section 39 to be omitted entirely. The tank 24 may be non-removable from the housing 21. The largest surface of the tank 24 may form a surface other than one of the side surfaces in the width direction W of housing 21. The handle 30 does not necessarily need to be rotatably supported by housing 21. The handle 30 may also be non-removable from housing 21, directly fixed to housing 21 without using fixing components 28 and 29, or omitted entirely.

The method of holding the air conditioning device 2 to the mounting frame 3 is not limited to being held on the upper surface of the holding section 41, as described in the above embodiment. For example, the air conditioning device 2 may be directly strapped to the holding section 41 of the base 4 using a surrounding rubber band. Additionally, the air conditioning device 2 does not necessarily need to be fixed to the base 4 via the fixtures 49 and 50. Instead, for example, the air conditioning device 2 may be directly secured to the base 4 using fastening components inserted through the fixed portions 26 and 27. The number, shape, arrangement, and other structural aspects of the fixed portions 26 and 27, the fixing sections 45 and 46, the fixtures 49 and 50, and the fixing members 452 may be modified as appropriate. Furthermore, some components of the fixtures 49 and 50 and the fixing members 452 may be omitted.

The configuration of the first fixing section 5 and the second fixing section 6 may be modified as necessary. For example, the shapes of the pair of first clamping members 51 and 52 and the pair of second clamping members 61 and 62 are not limited to flat plates and may have other shapes. At least one of the pair of first clamping members 51 and 52 and the pair of second clamping members 61 and 62 may be provided with a resin material such as rubber for slip prevention. The pair of first clamping members 51 and 52 may not necessarily include the first shaft holes 513 and 514 or the first elongated holes 523 and 524. The first fixing section 5 may be replaced with a U-shaped fixture that conforms to three surfaces of the first pillar 961, a band that wraps around and fixes the first pillar 961, or a bolt or similar fixing component inserted into the first pillar 961. Similarly, the second fixing section 6 may be replaced with a U-shaped fixture that conforms to three surfaces of the second support pillar 962, a band that wraps around and fixes the second support pillar 962, or a bolt or similar fixing component inserted into the second support pillar 962. The pair of second clamping members 61 and 62 may not necessarily include the second shaft hole 613 or the second elongated hole 626. The number, arrangement, length, and type of the first bolts 531 to 534 used in the first fixing section 5 may be modified as necessary. The number of the first bolts 531 to 534 may be between 1 and 3 or 5 or more. Likewise, the number, arrangement, length, and type of the second bolts 631 to 634 used in the second fixing section 6 may be modified as necessary. The number of the second bolts 631 to 634 may be between 1 and 3 or 5 or more. The mounting frame 3 may also be configured such that the first support member 7 is directly fixed to the first pillar 961 with bolts or similar components, in which case the first support member 7 functions as the first fixing section. The method for setting the imaginary line V may be modified according to the configuration of the first pillar fixing section 13, the second pillar fixing section 14, the first fixing section 5, and the second fixing section 6. For example, the imaginary line V may be a line connecting the front end of the first pillar fixing section 13 and the front end of the second pillar fixing section 14.

The configuration of the base 4 may be modified as necessary. The base 4 may have a structure in which the main body 40 and the shaft 43 are integrated. The base 4 may omit at least one of the connecting section 42, the shaft 43, the width adjustment mechanism 11, and the length adjustment mechanism 12. If the base 4 does not include the shaft 43, the base 4 is sufficient that the left end of the main body 40 is supported by the second support member 82. The shaft 43 may be non-extendable in the longitudinal direction K of the base 4. The base 4 may have a configuration in which the main body 40 extends and contracts in the longitudinal direction K, as seen in the modified example of the base 304. The shaft 43 may be provided on the first-direction side, meaning near the shaft 71, in the longitudinal direction K of the base 4. The connecting section 42 may be provided in the second direction of the holding section 41 and does not necessarily have to be directly connected to the holding section 41. While the shaft 43 is supported at two points by the connecting section 42, the shaft 43 may instead be supported at a single point, three or more points, or on the surface of a plate extending parallel to the bottom of the main body 40. The first-direction end of the shaft 43 may also be supported by the main body 40 at a position separated from the holding section 41 in the second direction.

The base 4 may be fixed in a manner that does not allow changes to a position in the width direction W relative to the first fixing section 5 and the second fixing section 6. The configuration of the width adjustment mechanism 11 may be modified as needed. The width adjustment mechanism 11 may be fixed to the left end of the main body 40, which is the end in the second direction, allowing the position of the base 4 in the width direction W relative to the second pillar fixing section 14 to be adjusted. The configuration that allows for adjustments to the position of the base 4 in the width direction W relative to the first fixing section 5 and the second fixing section 6 may be implemented in a location other than the base 4. For example, the first fixing section 5 may allow movement of the rear surface which connects to the first support member 7 in the front-rear direction. The first fixing section 5 may also allow for adjustment of a position connecting to the first support member 7 in the front-rear direction by being connected to the first support member 7 through a spacer. The second fixing section 6 may allow movement of the rear surface which connects to the second support member 82 through a spacer in the front-rear direction. The second fixing section 6 may also allow for adjustment of a position connecting to the second support member 82 in the front-rear direction by being connected to the second support member 82 through a spacer.

The base 4 may be formed by combining a part or all of structural components, or, like the modified example of the base 304, the base 304 may be partially or entirely formed by combining plate members. The cross-sectional shape of some or all of the structural components used in the base 4 may be of any shape, such as a polygonal or a circular shape. The number, length, longitudinal direction, and arrangement of the structural components making up the base 4 may be modified as needed. In the longitudinal direction K of the base 4, the center M2 of the holding section 41 may either coincide with the center M3 of the base 4 or be positioned to the left of the center M3.

The first support member 7 and the first lock mechanism 8 may be omitted. In that case, the base 4 may be directly fixed to the first fixing section 5 and the second fixing section 6 and may not be able to move between the first position and the second position relative to them. Like the modified mounting frame 303, the base 4 may be connected to the first fixing section 5 via the support part 305. The first support member 7 may be connected to both the base 4 and the first fixing section 5, supporting the base 4 in such manner that the base is movable between the first position and the second position, which is a position displaced relative to the first fixing section 5 and the second fixing section 6 with reference to the first position. For example, the first support member 7 may allow the base 4 to move in a parallel direction in the front-rear direction, the vertical direction, or the lateral direction relative to the first fixing section 5 and the second fixing section 6. Specifically, the first support member 7 may allow the base 4 to move horizontally on a base plate, allowing the base 4 to move between the first position on the base plate and the second position, which is a position where the base 4 is pulled out by a particular amount in any direction. The first support member 7 may include a hinge to allow the base 4 to rotate between the first position and the second position. Additionally, the first support member 7 may use a rail or link mechanism to enable movement between the first position and the second position. The definitions of the first position, the second position, and the third position may be modified as needed.

Furthermore, the first support member 7 may be formed without notches 724 and 725, reducing the size of the plate sections 721 and 723 relative to the first member 73, thereby preventing the first member 73 from interfering with the second member 72, even if the base 4 rotates counterclockwise beyond the parallel position of the longitudinal direction K relative to the extension surface of the wall section 732. Alternatively, the first support member 7 may be formed such that the first member 73 does interfere with the second member 72 when the base 4 rotates counterclockwise beyond the parallel position of the longitudinal direction K relative to the extension surface of the wall section 732.

The first support member 7 may be formed without the shaft hole 734 and at least one of the long holes 735 and 736. The formation position and shape of the shaft hole 734 and the long holes 735 and 736 on the wall section 732 may be modified as necessary. For example, the shaft hole 734 and the long holes 735 and 736 may be aligned along the same straight line in the axial direction J or along the same straight line in the longitudinal direction K of the base 4. The first support member 7 may be connected to any of the left side, front face, top face, or bottom face of the first fixing section 5, depending on the placement of the first pillar 961 of the vehicle 9. Additionally, only one of the long holes 735 and 736 may be formed relative to the shaft hole 734, or three or more long holes, including the long holes 735 and 736, may be formed.

The configuration of the first lock mechanism 8 may be modified according to the configuration of the first support member 7 and the base 4. The shaft 71 of the first support member 7 may be placed on the left side of the mounting frame 3, meaning the first direction may also be toward the left. The shaft 71 may extend in the left-right direction parallel to the longitudinal direction K of the mounting frame 3. In this case, the shaft 71 may be connected to any of the front, back, top, or bottom surfaces of the base 4. If a vertically extending hole is formed in the left end of the shaft 43, the first lock member 81 may be configured such that a position when the first lock member 81 entered into the hole is a first lock position, and a position when the first lock member 81 retracts from the hole is the first release position. The first lock position and the first release position may be appropriately adjusted based on the configuration of the first lock member 81 and the method of locking the base 4 using the first lock member 81. In other words, the direction in which the first lock member 81 moves from the first lock position to the first release position relative to the rotation path Q of the base 4 may be adjusted as necessary. For example, the first lock member 81 may be configured to move between the first lock position, where the first lock member 81 enters into the rotation path Q of the base 4, and the first release position, where the first lock member 81 retracts from the rotation path Q, by rotating horizontally about the shaft 71, which extends in the axial direction J. The first lock mechanism 8 may also be installed on the first support member 7. More specifically, the first lock mechanism 8 may include the second lock member 115 of the second lock mechanism 10, and the plate section 721 of the second member 72 may be provided with a hole that allows the second lock member 115 of the second lock mechanism 10 to move to the second lock position when the base 4 is in the first position. The shape, size, and placement of the contact surfaces 815 and 818 may be adjusted as needed. The first lock member 81 may have a single elongated contact surface extending in the left-right direction, connected to the contact surfaces 815 and 818. Additionally, the first lock member 81 may have a vertically extending surface that makes contact with the shaft 43.

The configuration of the second support member 82 as the first lock support section may be modified as necessary. The second support member 82 may include guiding sections such as elongated holes or grooves that guide the first lock member 81 between the first lock position and the first release position. In this case, the first lock member 81 should be provided with protrusions or shaft sections that are inserted into these guiding sections. If the weight of the first lock member 81 is sufficiently heavy, the urging member 86 may be omitted as necessary. The urging member 86 may be a torsion spring, a leaf spring, or another type of an urging component. The first lock mechanism 8 may also be configured so that the first lock member 81 moves between the first lock position and the first release position electrically. The first lock member 81 may be a fastening component, such as a bolt, that removably secures the second end portion 48 of the base 4 to the second fixing section 6. The first lock member 81 may also be a band component that secures the second end portion 48 of the base 4 to the second fixing section 6. In these cases, the second end portion 48 of the base 4 is supported by the second fixing section 6. The mounting frame 3 may have the second support member 82, which supports the shaft 43, and the first lock support section, which supports the first lock member 81, as separate components. The shape of the cutout sections 824 and 828 of the second support member 82 may be modified as needed. The third lock mechanism 870 may be formed without the hole 865, and the third lock mechanism 870 is unable to hold the first lock member 88 in the first release position. The shape and placement of holes 864 and 865 may also be modified as necessary.

The configuration of the second lock mechanism 10 may be modified as necessary depending on the structure of the first support member 7 and the base 4. The second lock mechanism 10 may be configured to move from the second release position to the second lock position only when the base 4 is in the second position. The second lock mechanism 10 may be formed to move from the second release position to the second lock position at three or more positions, including the second position and the third position. In this configuration, the position where the second lock member 115 enters the rotation path P of the restriction section is defined as the second lock position, while the position where the second lock member 115 retracts from the rotation path P is defined as the second release position. The second lock mechanism 10 may also be omitted. Additionally, the urging member 116 may be omitted as needed. The second lock mechanism 10 may also use an electric system to move the second lock member 115 between the second lock position and the second release position. Various fixing components may be modified as necessary and may include bolts and nuts, various types of screws, or other fixtures. The modified examples described above may also be combined as long as there is no contradiction in their configurations.

### DESCRIPTION OF NUMERALS

3, 303: Mounting Frame, 4, 304: Base, 5, 105: First Fixing Section, 6, 106: Second Fixing Section, 7: First Support Member, 8, 608: First Lock Mechanism, 9: Vehicle, 11, 308: Width Adjustment Mechanism, 12, 307: Length Adjustment Mechanism, 13, 310: First Pillar Fixing Section, 14, 314: Second Pillar Fixing Section, 41: Holding Section, 42: Connecting Section, 43: Shaft, 47: First End Portion, 48: Second End Portion, 51, 52, 150, 160: First Clamping Member, 61, 62, 250, 260: Second Clamping Member, 71: Shaft, 77: First Support Member, 82: Second Support Member, 145: First Bending Section, 151: First Pressed Wall Section, 161, 163: First Wall Section, 164: First Pressing Wall Section, 165: First Insertion Section, 171: First Adjustment Member, 172, 173: Second Adjustment Member, 174: Third Fixing Member, 175 to 177, 531: First Bolt, 181~183: Circular Hole, 245: Second Bending Section, 251: Second Pressed Wall Section, 261, 263: Second Wall Section, 264: Second Pressing Wall Section, 265: Second Insertion Section, 275, 631: Second Bolt, 431: First Member, 432: Second Member, 543, 942: First Fixing Member, 545, 546, 943, 944: Second Fixing Member, 721, 723: Plate Member, 724, 725: Notch, 732, 821: Wall Section, 734, 832: Shaft Hole, 735, 736, 838, 839: Elongated Hole, 961, 963: First Pillar, 962, 964: Second Pillar, C1: First Clamping Direction, C2: Second Clamping Direction, F1, F2: Longitudinal Direction, J: Axial Direction, K: Longitudinal Direction, M2, M3: Center, V: Imaginary Line, W: Width Direction

## Claims

1. A mounting frame to be fixed to an open-cabin type vehicle having a first pillar and a second pillar, comprising:
a base including a holding section configured to hold a subject, and a length adjustment mechanism connected to the holding section, the base having a length in a first longitudinal direction adjustable by the length adjustment mechanism;
a first pillar fixing section that fixes a first end portion of the base, in a first direction along the first longitudinal direction, to the first pillar of the vehicle; and
a second pillar fixing section that fixes a second end portion of the base, in a second direction opposite to the first direction, to the second pillar of the vehicle.

2. The mounting frame according to claim 1,
wherein the length adjustment mechanism including a shaft enabling adjustment of a projection amount of the base in the first longitudinal direction from the holding section.

3. The mounting frame according to claim 2,
wherein the base including a connecting section in the second direction of the holding section, and
wherein the shaft is connected to the connecting section, and is configured to enable adjustment of a projection amount of the shaft in the second direction from the connecting section.

4. The mounting frame according to claim 2,
wherein the shaft includes a first member having a tubular shape and a second member configured to be inserted into the first member, the length of the base in the first longitudinal direction being adjustable by adjusting an overlapping length of the first member and the second member in the first longitudinal direction.

5. The mounting frame according to any one of claim 1 to claim 4,
wherein at least one of the first pillar fixing section or the second pillar fixing section includes:
a first fixing member;
a second fixing member different from the first fixing member;
a wall section facing a fixed subject, the wall section including;
a shaft hole in which the first fixing member is inserted; and
an elongated hole in which the second fixing member is inserted, the elongated hole allowing the wall section to rotate about the first fixing member with respect to the fixed subject in a state where the second fixing member is inserted in the elongated hole.

6. The mounting frame according to any one of claim 1 to claim 4,
wherein the base includes a width adjustment mechanism configured to adjust a position of the base relative to the first pillar fixing section and the second pillar fixing section in a width direction perpendicular to both the first longitudinal direction of the base and a second longitudinal direction of the first pillar.

7. The mounting frame according to any one of claim 1 to claim 4,
wherein the first pillar fixing section includes:
a support member configured to connect to the first end portion of the base and support the base; and
a first fixing section configured to connect to the support member and fixed to the first pillar fixing section of the vehicle,
wherein the support member is positioned at the second direction side relative to an end of the first fixing section in the first direction in a direction along an imaginary line segment connecting the first pillar fixing section and the second pillar fixing section.

8. The mounting frame according to any one of claim 1 to claim 4,
wherein the first pillar fixing section includes a pair of first clamping members configured to be fixed by clamping the first pillar in a first clamping direction, the first clamping direction being a direction intersecting a second longitudinal direction of the first pillar; and
wherein the second pillar fixing section includes a pair of second clamping members configured to be fixed by clamping the second pillar in a second clamping direction, the second clamping direction being a direction intersecting a third longitudinal direction of the second pillar.

9. The mounting frame according to any one of claim 1 to claim 4,
wherein the first pillar fixing section includes a first support member connected to the first end portion of the base, the first support member supporting the base in such a manner that the base is rotatable about a shaft extending in an axial direction perpendicular to the first longitudinal direction between a first position and a second position different from the first position; and
wherein the second pillar fixing section includes a second support member, the second support member supporting the second end portion of the base in the second direction in a case where the base is in the first position.

10. The mounting frame according to any one of claim 1 to claim 4, further comprising:
a first fixing section fixed to the first pillar fixing section of the vehicle;
a second fixing section fixed to the second pillar fixing section of the vehicle;
a first support member connected to each of the base and the first fixing section, the support member supporting the base in such a manner that the base is movable between a first position and a second position, the second position being a position displaced relative to the first fixing section and the second fixing section with reference to the first position; and
a first lock mechanism including a first lock member movable between a first lock position and a first release position, wherein, in a case where the first lock member is in the first lock position, the first lock member enters a first rotation path of the base moving from the first position to the second position and restricts moving of the base from the first position to the second position, and in a case where the first lock member is in the first release position, the first lock member retracts from the first rotation path and allows the base to move from the first position to the second position.

11. The mounting frame according to claim 10,
wherein the first support member is connected to both the first fixing section and the first end portion of the base, and is configured to support the base in such a manner that the base is rotatable about a shaft extending in an axial direction intersecting the first longitudinal direction of the base;
wherein the first lock mechanism is fixed to the second fixing section, wherein, in a case where the first lock member is in the first lock position, the first lock member enters the first rotation path and restricts rotation of the base from the first position to the second position, and in a case where the first lock member is in the first release position, the first lock member retracts from the first rotation path and allows the base to rotate from the first position to the second position.

12. The mounting frame according to claim 11, further comprising:
a second support member connected to the second fixing section and configured to support a second end portion of the base when the base is in the first position, the second end portion being an end portion of the base in a second direction opposite to the first direction,
wherein the base is connected to the holding section and includes a shaft extending from the holding section in the second direction;
wherein the second support member configured to support the shaft when the base is in the first position; and
wherein the first rotation path is a path of the shaft when the base is moved from the first position to the second position.

13. The mounting frame according to claim 12,
wherein the first lock member includes a contact surface, the contact surface contacting with the shaft of the base in a case where the first lock member is in the first lock position, the contact surface being inclined toward a side where the first lock member moves from the first release position to the first lock position to a greater extent on a side where the base moves from the first position to the second position.

14. The mounting frame according to claim 12,
wherein at least one of the base and the first support member includes a restriction section configured to move together with the base, and
wherein the mounting frame further comprises a second lock mechanism including a second lock member movable between a second lock position and a second release position, wherein, in a case where the second lock member is in the second lock position and the base is in the second position, the second lock member enters a second rotation path of the restriction section when the base moves from the first position to the second position and restricts movement of the base from the second position to the first position, and in a case where the second lock member is in the second release position and the base is in the second position, the second lock member retracts from the second rotation path and allows the base to move from the second position to the first position.

15. An air conditioning system comprising an air conditioning device as the subject and the mounting frame according to any one of claim 1 to claim 4,
wherein the air conditioning device comprises:
a housing;
a power section being one of a power harness extending from end of one side of the housing in a longitudinal direction and a power battery;
an air outlet provided at the end of the one side of the housing in the longitudinal direction;
a fan configured to be driven by electric power supplied from the power section and blow air to exterior of the housing through the air outlet; and
a fixed portion,
wherein the base is placed toward one side in the longitudinal direction,
wherein the holding section is configured to hold the air conditioning device in a posture where the one side of the housing in the longitudinal direction aligns with the one side of the mounting frame in the longitudinal direction, and
wherein the base includes a fixture configured to fix the fixed portion of the air conditioning device to the holding section.
